# EUROPEAN PATENT APPLICATION

(11) **EP 4 414 394 A1**
(43) Date of publication of application: **14.08.2024**
(21) Application number: 22878184.5
(22) Date of filing: 04.08.2022
(51) Int. Cl.: C08F 290/06, C09C 1/44, C09C 3/04, C09C 3/10, C09D 5/24, C09D 17/00, C08L 33/14, C08L 33/24, C09D 201/00, C09D 11/037, C01B 32/174, C08K 3/04, C09D 7/61, C09K 23/52

(54) **METHOD FOR PRODUCING CARBON MATERIAL DISPERSED LIQUID**

(30) Priority: 04.10.2021 JP 2021163554; 19.01.2022 JP 2022006678
(71) Applicant: DAINICHISEIKA COLOR & CHEMICALS MFG. CO., LTD., Chuo-ku Tokyo 103-8383 (JP)
(72) Inventor: DOI Seiji, Tokyo 103-8383 (JP); ONIDUKA Hiroya, Tokyo 103-8383 (JP); HASHIMOTO Risa, Tokyo 103-8383 (JP); UMEDA Daichi, Tokyo 103-8383 (JP); SHIMANAKA Hiroyuki, Tokyo 103-8383 (JP); KAMABAYASHI Jun, Tokyo 103-8383 (JP)
(74) Representative: Wächtershäuser & Hartz Patentanwaltspartnerschaft mbB
(86) International application number: PCT/JP2022/029986
(87) International publication number: WO 2023/058313

(57) **Abstract**

There is provided a method for producing a carbon material dispersion, which makes it possible to simply produce a dispersion in which a carbon material containing a carbon nanotube is dispersed favorably without substantially producing a coarse aggregate, the dispersion excellent in viscosity stability. The method is a method for producing a carbon material dispersion, the method including a step (1) of subjecting a raw material containing: a carbon material containing a carbon nanotube; a dispersant; and a liquid medium to a stirring treatment to obtain a wetted mixture, and a step (2) of subjecting the wetted mixture to a dispersion treatment using a high-pressure homogenizer, wherein the high-pressure homogenizer is at least any one of a high-pressure homogenizer (A1) employing a system of allowing the wetted mixtures jetted by pressurization to collide with each other to form fine particles and a high-pressure homogenizer (A2)employing a system of introducing the wetted mixture pressurized into a collision chamber to form fine particles, and a two-stage dispersion treatment in which the inner diameter of the ejection nozzle and the treatment pressure are changed is performed.

## Description

### Technical Field

The present invention relates to a method for producing a carbon material dispersion, a carbon material dispersion, and a product.

### Background Art

Carbon materials (nanocarbon materials) such as carbon black, a carbon fiber, a carbon nanotube, graphite, and graphene are materials that have a six-membered cyclic graphite structure formed by covalent bonds of carbon atoms and exhibit various properties such as electric conductivity and heat transfer properties, and methods for utilizing the properties have been studied in a wide range of fields. For example, taking notice of the electrical characteristics, thermal characteristics, characteristics as a filler of carbon materials, use of carbon materials for antistatic agents, electrically conductive materials, plastic reinforcing materials, semiconductors, fuel cell electrodes, cathode rays for displays has been studied.

For these applications, a carbon material dispersion that exhibits good dispersibility for a carbon material and retains the dispersibility over a long period of time is required. However, nano-sized carbon materials have high surface energy and strong Van der Waals force acts thereon, and therefore nano-sized carbon materials are likely to aggregate. For this reason, a nano-sized carbon material, even when dispersed in a liquid medium, is likely to aggregate immediately in many cases.

As a method for producing a dispersion in which a carbon material is dispersed stably in a liquid medium, there have been proposed methods in which constituents are mixed and dispersed using a bead mill, an ultrasonic disperser, a high-speed stirrer, or the like in the presence of a disperser, such as a surfactant or a polymeric dispersant (Patent Literatures 1 and 2).

In addition, it has been proposed to disperse a carbon nanotube under different pressure conditions changing the pressurization conditions for every dispersion treatment (Patent Literature 3).

### Citation List

### Patent Literature

Patent Literature 1: Japanese Patent Laid-Open No. 2010-174084
Patent Literature 2: Japanese Translation of PCT International Application Publication No. 2013-537570
Patent Literature 3: Japanese Patent No. 6652049

### Summary of Invention

### Technical Problem

However, even when a carbon material, such as a carbon nanotube, is merely subjected to a dispersion treatment under the presence of a dispersant, it cannot necessarily be said that the dispersibility of the resultant dispersion is not sufficient, and the viscosity may increase or coarse aggregates may be formed with time in some cases.

Note that Patent Literature 3 states that by dispersing a carbon nanotube plural times under different pressure conditions, the carbon nanotube can efficiently and highly be dispersed while damage is suppressed. However, the dispersibility of the carbon nanotube in the dispersion is evaluated only by visual observation, and as for the physical properties, only the electrical conductivity has measured. Therefore, it cannot necessarily be said that the dispersibility of the carbon nanotube in the resultant dispersion can sufficiently be evaluated.

The present invention has been completed in view of such problems of the conventional techniques, and an object of the present invention is to provide a method for producing a carbon material dispersion, which makes it possible to simply produce a dispersion in which a carbon material containing a carbon nanotube is dispersed favorably without substantially producing a coarse aggregate, the dispersion excellent in viscosity stability. Another object of the present invention is to provide: a carbon material dispersion which is produced by this production method and in which a carbon material containing a carbon nanotube is dispersed favorably without substantially producing a coarse aggregate, the carbon material dispersion excellent in viscosity stability; and a product using the carbon material dispersion.

### Solution to Problem

That is, according to the present invention, a method for producing a carbon material dispersion, described below, is provided.
[1] A method for producing a carbon material dispersion, the method comprising: a step (1) of subjecting a raw material comprising: a carbon material comprising a carbon nanotube; a dispersant; and a liquid medium to a stirring treatment to obtain a wetted mixture; and a step (2) of subjecting the wetted mixture to a dispersion treatment using a high-pressure homogenizer, wherein the high-pressure homogenizer is at least any one of a high-pressure homogenizer (A1) employing a system of allowing the wetted mixtures jetted by pressurization to collide with each other to form fine particles and a high-pressure homogenizer (A2) employing a system of introducing the wetted mixture pressurized into a collision chamber to form fine particles, and the wetted mixture is subjected to the dispersion treatment so as to satisfy the following dispersion condition:
   [dispersion condition]
   a first treatment is performed X times, wherein the first treatment is such that: a treatment pressure of 1 to 100 MPa is applied to the wetted mixture to form fine particles using any one of the high-pressure homogenizer (A1) and the high-pressure homogenizer (A2); and the wetted mixture is ejected from an ejection nozzle having a nozzle inner diameter of D₁; and then,
   a second treatment is performed Y times, wherein the second treatment is such that: a treatment pressure of 120 to 250 MPa is applied to the wetted mixture to form fine particles using any one of the high-pressure homogenizer (A1) and the high-pressure homogenizer (A2); and the wetted mixture is ejected from an ejection nozzle having a nozzle inner diameter of D₂, provided that D₁>D₂, X≥2, and 2≤Y≤30.
[2] The method for producing a carbon material dispersion according to [1], wherein the nozzle inner diameter D₁ is 0.15 to 2.0 mm, and the nozzle inner diameter D₂ is 0.1 to 1.0 mm.
[3] The method for producing a carbon material dispersion according to [1] or [2], wherein the liquid medium is water, or a mixed solvent of water and a water-soluble organic solvent, the dispersant is a cellulose derivative or a polymeric dispersant, the cellulose derivative is such that a 1%-by-mass aqueous solution thereof has a viscosity of 20 to 500 mPa·s and a degree of etherification thereof is 0.5 to 0.9, and the polymeric dispersant is a polymer comprising 5 to 40% by mass of a constituent unit (1) derived from at least one monomer 1 selected from the group consisting of 2-vinylpyridine, 4-vinylpyridine, 1-vinylimidazole, and quaternary ammonium salts thereof, 50 to 80% by mass of a constituent unit (2) derived from a monomer 2 represented by the following formula (1), and 0.5 to 40% by mass of a constituent unit (3) derived from a monomer 3 copolymerizable with the monomer 1 and the monomer 2, wherein the monomer 3 comprises α-methylstyrene and (meth)acrylic acid, and the content of a constituent unit derived from α-methylstyrene is 0.5 to 5% by mass, the content of a constituent unit derived from (meth)acrylic acid is 0.5 to 30% by mass, and the number average molecular weight is 5,000 to 20,000. 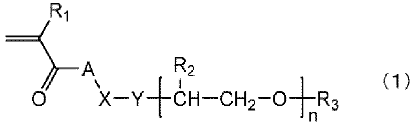 wherein R₁ represents a hydrogen atom or a methyl group, A represents O or NH, X represents an ethylene group or a propylene group, Y represents O, NHCOO, or NHCONH, each of R₂ independently represents a hydrogen atom or a methyl group, n represents an average number of repeating units of 20 to 100, and R₃ represents a hydrogen atom or a methyl group, provided that the number n_{H} of repeating units where R₂ is a hydrogen atom is 1/2 or more of the number n_{T} of repeating units in the whole polymer.
[4] The method for producing a carbon material dispersion according to [1] or [2], wherein the liquid medium is a water-soluble organic solvent substantially free of water, and the dispersant is a polymer comprising 3 to 55% by mass of a constituent unit (A) derived from a monomer A represented by the following formula (A), 30% by mass or less of a constituent unit (B) derived from a monomer B represented by the following formula (B), 45 to 90% by mass of a constituent unit (C) derived from a monomer C represented by the following formula (C), and 0.5 to 20% by mass of a constituent unit (D) derived from a monomer D copolymerizable with the monomers A, B, and C, the polymer having an amine value of 100 mgKOH/g or less and a number average molecular weight of 5,000 to 20,000. 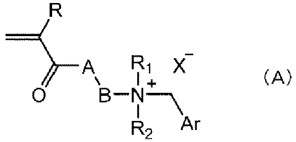
   wherein R represents a hydrogen atom or a methyl group, A represents O or NH, B represents an ethylene group or a propylene group, R₁ and R₂ each independently represent a methyl group or an ethyl group, Ar represents a phenyl group, a naphthyl group, an anthracenyl group, or a pyrenyl group, and X represents a chlorine atom, a bromine atom, bis(trifluoromethyl)sulfonimide, or bis(nonaflulorobutanesulfonyl) imide. 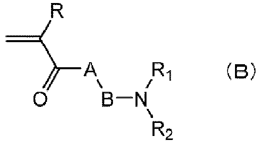
   wherein R represents a hydrogen atom or a methyl group, A represents O or NH, B represents an ethylene group or a propylene group, and R₁ and R₂ each independently represent a methyl group or an ethyl group. 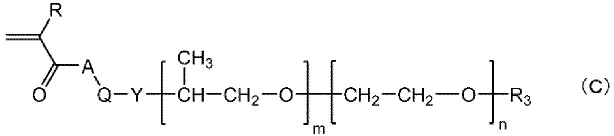
   wherein R represents a hydrogen atom or a methyl group, A represents O or NH, Q represents an ethylene group or a methylethylene group, Y represents O, NHCOO, or NHCONH, m and n each independently represent an average number of repeating units of 0 or more and satisfy m + n = 20 to 100, and R₃ represents a C1-18 alkyl group, aryl group, or alkylaryl group.
[5] The method for producing a carbon material dispersion according to any one of [1] to [4], wherein the content of the dispersant based on 100 parts by mass of the carbon material in the raw material is 10 to 500 parts by mass, the content of the carbon material in the raw material is 10% by mass or less, and the content of the dispersant in the raw material is 30% by mass or less.
   Further, according to the present invention, a carbon material dispersion described below is provided.
[6] A carbon material dispersion produced by the method according to any one of [1] to [5].
[7] The carbon material dispersion according to [6], wherein when a dilute dispersion is obtained by diluting the carbon material dispersion with a blank solution having the same composition as the carbon material dispersion except that the carbon material is not contained such that absorbance at a wavelength W_{M}, which is a median value of an arbitrary wavelength W_{L} within a range of 350 to 550 nm and an arbitrary wavelength W_{H} within a range of 650 to 850 nm, is 1.2 to 2.2, a ratio of absorbance A_{L} at the wavelength W_{L} to absorbance A_{H} at the wavelength W_{H}, (A_{L}/A_{H}), is 1.40 or more for the dilute dispersion.
   Further, according to the present invention, products described below are provided.
[8] A product of any one of a paint, an ink, a coating agent, a material for a resin-shaped article, an electrically conductive material, a thermally conductive material, and an antistatic agent, the product containing the carbon material dispersion according to [6] or [7].
[9] A product of any one of a battery material and a mechanical component, the product including a film formed with the carbon material dispersion according to [6] or [7].

### Advantageous Effects of Invention

The present invention can provide a method for producing a carbon material dispersion, which makes it possible to simply produce a dispersion in which a carbon material containing a carbon nanotube is dispersed favorably without substantially producing a coarse aggregate, the dispersion excellent in viscosity stability. Further, the present invention can provide: a carbon material dispersion which is produced by this production method and in which a carbon material containing a carbon nanotube is dispersed favorably without substantially producing a coarse aggregate, the carbon material dispersion excellent in viscosity stability; and a product using the carbon material dispersion.

### Description of Embodiments

### <Method for Producing Carbon Material Dispersion>

Hereinafter, embodiments of the present invention will be described, but the present invention is not limited to the following embodiments. The method for producing a carbon material dispersion (hereinafter, also simply referred to simply as "the production method (of the present invention)") includes: a step (1) of subjecting a raw material comprising: a carbon material comprising a carbon nanotube; a dispersant; and a liquid medium to a stirring treatment to obtain a wetted mixture; and a step (2) of subjecting the wetted mixture to a dispersion treatment using a high-pressure homogenizer. The high-pressure homogenizer which is used in the step (2) is at least any one of a high-pressure homogenizer (A1) employing a system of allowing the wetted mixtures jetted by pressurization to collide with each other to form fine particles and a high-pressure homogenizer (A2) employing a system of introducing the wetted mixture pressurized into a collision chamber to form fine particles. In the step (2), the carbon material dispersion is prepared by subjecting the wetted mixture to a dispersion treatment so as to satisfy the following dispersion condition. Hereinafter, details on the method for producing a carbon material dispersion of the present invention will be described. Hereinafter, the carbon material dispersion will also be referred to simply as "the dispersion."

### [Dispersion Condition]

A first treatment is performed X times, wherein the first treatment is such that: a treatment pressure of 1 to 100 MPa is applied to the wetted mixture to form fine particles using any one of the high-pressure homogenizer (A1) and the high-pressure homogenizer (A2); and the wetted mixture is ejected from an ejection nozzle having a nozzle inner diameter of D₁, and then a second treatment is performed Y times, wherein the second treatment is such that: a treatment pressure of 120 to 250 MPa is applied to the wetted mixture to form fine particles using any one of the high-pressure homogenizer (A1) and the high-pressure homogenizer (A2); and the wetted mixture is ejected from an ejection nozzle having a nozzle inner diameter of D₂, provided that D₁>D₂, X≥2, and 2≤Y≤30.

### (Step (1))

The step (1) is a step of obtaining a wetted mixture. The wetted mixture can be obtained by subjecting a raw material containing: a carbon material containing a carbon nanotube; a dispersant; and a liquid medium to a stirring treatment. The wetted mixture can also be prepared by using a relatively calm stirring apparatus, such as, for example, a magnetic stirrer, a dissolver, a homogenizer, or the like.

### [Carbon Material]

The carbon material contains a carbon nanotube. As the carbon nanotube, a multi-walled carbon nanotube that has multilayers, a single-walled carbon nanotube that has a single layer, and the like can be used. The diameter, length, shape, production method, and the like are not particularly limited, and any of carbon nanotubes can be used. In the carbon nanotube, a metal or a salt of a metal, such as platinum, palladium, or the like, may be doped. In addition, the carbon nanotube may be surface-modified by an oxidation treatment, a plasma treatment, a radiation treatment, a corona treatment, a coupling treatment, or the like.

As the carbon material other than the carbon nanotube, carbon black, a carbon fiber, graphite, graphene, and the like can be used. Examples of the carbon black include acetylene black, furnace black, thermal black, and Ketjen black. The structure and values of physical properties, such as oil absorption and specific surface area, of the carbon black and whether or not the carbon black is subjected to a surface modification or the like, such as oxidation, are not particularly limited, and conventionally known carbon black can be used.

Examples of the carbon fiber include a PAN-based carbon fiber using polyacrylonitrile as a raw material, a pitch-based carbon fiber using pitch as a raw material, and recycled products thereof. Among others, the carbon fiber is preferably a carbon nanofiber having a nano-sized fiber diameter and having a cylindrical shape obtained by winding a six-membered cyclic graphite structure. The particle size, fiber diameter, fiber length, shape, production method, and the like of the carbon material other than the carbon nanotube are not particularly limited. In the carbon material, a metal or a salt of a metal, such as platinum or palladium, may be doped. The carbon material may be surface-modified by an oxidation treatment, a plasma treatment, a radiation treatment, a corona treatment, a coupling treatment, or the like.

### [Dispersant]

The dispersant is a constituent for dispersing the carbon material in the liquid medium. As the dispersant, anionic, cationic, nonionic, and amphoteric surfactants; and a polymeric dispersant can be used. Among others, a polymer (resin ) is preferably used as the dispersant. When the liquid medium is an aqueous medium containing water, the dispersant is preferably a cellulose derivative or a polymeric dispersant.

Examples of the cellulose derivative which is used as the dispersant when the liquid medium is water, or a mixed solvent (aqueous medium) of water and a water-soluble organic solvent include methyl cellulose, carboxymethyl cellulose, hydroxyethyl cellulose, hydroxypropylmethyl cellulose, and metal salts thereof. Among others, carboxymethyl cellulose and carboxymethyl cellulose sodium salt are preferable. Further, the cellulose derivative is preferably such that a 1%-by-mass aqueous solution thereof has a viscosity of 20 to 500 mPa·s and a degree of etherification thereof is 0.5 to 0.9. By using such a cellulose derivative, the carbon nanotube can be dispersed more favorably and storage stability can be improved.

The polymeric dispersant which is used as the dispersant when the liquid medium is an aqueous medium containing water is preferably a polymer containing 5 to 40% by mass of a constituent unit (1) derived from at least one monomer 1 selected from the group consisting of 2-vinylpyridine, 4-vinylpyridine, 1-vinylimidazole, and quaternary ammonium salts thereof, 50 to 80% by mass of a constituent unit (2) derived from a monomer 2 represented by the following formula (1), and 0.5 to 40% by mass of a constituent unit (3) derived from a monomer 3 copolymerizable with the monomer 1 and the monomer 2, the polymer having a number average molecular weight of 5,000 to 20,000. 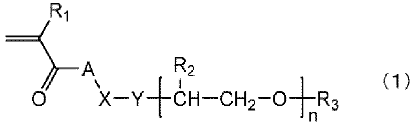 wherein R₁ represents a hydrogen atom or a methyl group, A represents O or NH, X represents an ethylene group or a propylene group, Y represents O, NHCOO, or NHCONH, each of R₂ independently represents a hydrogen atom or a methyl group, n represents an average number of repeating units of 20 to 100, and R₃ represents a hydrogen atom or a methyl group, provided that the number n_{H} of repeating units where R₂ is a hydrogen atom is 1/2 or more of the number n_{T} of repeating units in the whole polymer.

Dimethylaminoethyl (meth)acrylate or the like is also included as a general basic monomer. However, by using at least any one of 2-vinylpyridine, 4-vinylpyridine, and 1-vinylimidazole, dispersion stability of the carbon material dispersion can be improved more and the viscosity of the carbon material dispersion can be lowered. Each of 2-vinylpyridine, 4-vinylpyridine, and 1-vinylimidazole is a monomer having an aromatic ring having a structure similar to the six-membered cyclic structure of the carbon material. Therefore, it is considered that by adopting the constituent unit (1) derived from at least any one of these monomers, the adsorption power to the carbon material due to Van der Waals force or *π*-*π* stacking can be enhanced. Further, the surface of the carbon material may be oxidized in some cases and a carboxy group or a phenolic hydroxy group may be present thereon in some cases. It is considered that by forming an ionic bond between the carboxy group or the phenolic hydroxy group and the basic group in the constituent unit (1), the polymeric dispersant is more likely to be adsorbed to the carbon material and the dispersibility is improved further. Note that 4-vinylpyridine is particularly preferable as the monomer 1.

By using a quaternary ammonium salt of 2-vinylpyridine, 4-vinylpyridine, or 1-vinylimidazole as the monomer 1, the dispersibility can be enhanced further. By making the constituent unit derived from at least any one of 2-vinylpyridine, 4-vinylpyridine, and 1-vinylimidazole into a quaternary ammonium salt, the constituent unit (1) derived from a quaternary ammonium salt can be prepared. For example, a halide, a sulfuric acid ester, or the like can be used as a material for forming a quaternary ammonium salt (quaternary ammonium salt-forming agent). Examples of the halide include methyl chloride and benzyl chloride. Examples of the sulfuric acid ester include dimethyl sulfate and diethyl sulfate. Examples of the quaternary ammonium salt include an arylmethyl halide. Examples of the arylmethyl group include a benzyl group, a naphthylmethyl group, an anthracenylmethyl group, and a pyrenylmethyl group. Among others, a naphthylmethyl group is preferable.

The monomer 2 is a macromonomer represented by the following formula (1) and having a polyalkylene glycol chain. By introducing the constituent unit (2) derived from the monomer 2, a polymer having a structure in which the polyalkylene glycol chain is grafted can be prepared. The polyalkylene glycol chain dissolves in water that is a liquid dispersion medium. Then, the constituent units (1) adsorbed to the carbon material function as steric hindrance among particles due to the dissolution of the polyalkylene glycol chain and repel one another, making it possible to disperse the carbon material in the liquid medium favorably and stably over a long period of time. 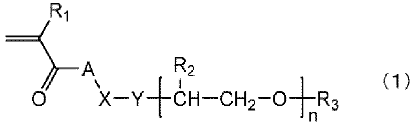 wherein R₁ represents a hydrogen atom or a methyl group, A represents O or NH, X represents an ethylene group or a propylene group, Y represents O, NHCOO, or NHCONH, each of R₂ independently represents a hydrogen atom or a methyl group, n represents an average number of repeating units of 20 to 100, and R₃ represents a hydrogen atom or a methyl group, provided that the number n_{H} of repeating units where R₂ is a hydrogen atom is 1/2 or more of the number n_{T} of repeating units in the whole polymer.

The molecular weight of the monomer 2 represented by formula (1) is about 880 to about 5,800. In formula (1), when the number n_{H} of repeating units where R₂ is a hydrogen atom is 1/2 or more of the number n_{T} of repeating units in the whole polymer, thereby it is possible to make the polyalkylene glycol chain water-soluble. Among others, the number n_{H} of repeating units where R₂ is a hydrogen atom is 3/5 or more of the number n_{T} of repeating units in the whole polymer.

The monomer 3 is a monomer copolymerizable with the monomer 1 and the monomer 2. As the monomer 3, a (meth)acrylic acid-based monomer is preferably used. Specific examples of the monomer 3 include (meth)acrylic acid; monofunctional (meth)acrylates having a substituent such as methyl, ethyl, propyl, butyl, amyl, 2-ethylhexyl, isooctyl, nonyl, dodecyl, hexadecyl, octadecyl, isostearyl, behenyl, cyclohexyl, trimethylcyclohexyl, t-butyl cyclohexyl, benzyl, methoxyethyl, butoxyethyl, phenoxyethyl, nonylphenoxyethyl, glycidyl, isobornyl, dicyclopentanyl, dicyclopentenyl, dicyclopentenyloxyethyl, isobornyl, 2-hydroxyethyl, 2-hydroxypropyl, and 4-hydroxybutyl; and polymer-type (meth)acrylates that are macromonomers such as a poly(n=2 or more)alkylene(C2-4) glycol mono(meth)acrylate, a poly(n=2 or more)alkylene(C2-4) glycol monoalkyl(C1-22) mono(meth)acrylate, and poly(n=2 or more)hydroxyalkanoic acid(C5-18) mono(meth)acrylate. In addition, a vinyl monomer, such as styrene, vinyltoluene, vinylnaphthalene, vinylcaprolactone, α-methylstyrene, and vinyl acetate, can also be used as the monomer 3.

It is preferable to use α-methylstyrene as the monomer 3 because the molecular weight can easily be controlled. Specifically, the monomer 3 preferably contains α-methylstyrene, and the content of a constituent unit derived from α-methylstyrene in the polymer is preferably 0.5 to 5% by mass, more preferably 1 to 3% by mass. When the content of the constituent unit derived from α-methylstyrene is less than 0.5% by mass, the polymerization may progress somewhat nonuniformly in some cases, or the monomer 2 may be left or gel in some cases. On the other hand, when the content of the constituent unit derived from α-methylstyrene is more than 5% by mass, α-methylstyrene whose polymerizability is somewhat poor may be left in some cases, or the molecular weight may be controlled excessively, which may somewhat lower the conversion in some cases.

In addition, it is preferable to use (meth) acrylic acid as the monomer 3. When the polymer contains a constituent unit derived from (meth)acrylic acid which is an acid constituent, thereby water-solubility of the polymer is improved, and when the quaternary ammonium salt group is also present in the polymer, the polymer exhibits amphoteric ionicity, and therefore the polymer is likely to be ionically adsorbed to the carbon material, which makes it possible to improve the dispersibility further. In addition, when the polymer exhibits the amphoteric ionicity, thereby intramolecular and intermolecular ion bonds are formed, which makes it easy to form a crosslinking structure, so that detachment from the carbon material can further be suppressed.

The content of the constituent unit derived from (meth)acrylic acid in the polymer is preferably 0.5 to 30% by mass, more preferably 1 to 10% by mass. When the content of the constituent unit derived from (meth)acrylic acid is less than 0.5% by mass, there is a tendency that an effect as an acid constituent is deficient. On the other hand, when the content of the constituent unit derived from (meth) acrylic acid is more than 30% by mass, the water-solubility may be excessively high in some cases and the water fastness of a coating film or the like to be formed is somewhat lowered in some cases.

In the polymeric dispersant (polymer), the content of the constituent unit (1) is 5 to 40% by mass, preferably 10 to 20% by mass, the content of the constituent unit (2) is 50 to 80% by mass, preferably 55 to 75% by mass, and the content of the constituent unit (3) is 0.5 to 40% by mass, preferably 1 to 31% by mass. Note that the total content of the constituent unit (1), the constituent unit (2), and the constituent unit (3) is assumed to be 100% by mass.

When the content of the constituent unit (1) is less than 5% by mass, the polymeric dispersant cannot be sufficiently adsorbed on the carbon material. On the other hand, when the content of the constituent unit (1) is more than 40% by mass, coloration or odor may occur in some cases, and the polymeric dispersants are likely to get together to be adsorbed on the carbon material, so that the polymeric dispersant may function as a flocculant in some cases.

The proportion of the constituent unit (2) in the constituent units contained in the polymer is the largest. Therefore, the polyalkylene glycol chains densely present in the polymer function as steric hindrance to keep the dispersed carbon materials from coming into close proximity, making it possible to disperse the carbon material stably. When the content of the constituent unit (2) is less than 50% by mass, the steric hindrance may be insufficient in some cases, and the polymer may be difficult to dissolve in water in some cases. On the other hand, when the content of the constituent unit (2) is more than 80% by mass, the monomer 2 whose reactivity is somewhat low is likely to be left without being polymerized. Note that when the content of the constituent unit (3) is more than 40% by mass, the function as a dispersant is lowered because the proportion of the other constituent units is relatively decreased.

The number average molecular weight of the polymer which is used as the polymeric dispersant is 5,000 to 20,000, preferably 10,000 to 15,000. When the number average molecular weight of the polymer is lower than 5,000, the amount of the constituent unit (2), derived from the monomer 2 which is a macromonomer, to be introduced is small, which makes the dispersion stability insufficient. On the other hand, when the number average molecular weight of the polymer is higher than 20,000, the viscosity of a resultant carbon material dispersion may be excessively high in some cases, and the necessary amount of the polymeric dispersant may be too large in some cases. The number average molecular weight herein is a value in terms of polystyrene, measured by gel permeation chromatography.

The above-described polymer which can be used as the polymeric dispersant can be produced by a conventionally known radical polymerization method or living radical polymerization method. It is preferable to produce the polymer by a living radical polymerization method among others because the molecular weight of the main chain can be controlled uniformly and an AB block copolymer can be made according to the method of adding monomers.

Examples of the living radical polymerization method include a polymerization method in which the molecular weight is adjusted using a chain transfer agent such as a thiol, an Atom Transfer Radical Polymerization method (ATRP method), a Reversible Addition-Fragmentation Chain Transfer Polymerization method (RAFT method), a Nitroxide-Mediated Polymerization method (NMP method), an Organotellurium-Mediated Living Radical Polymerization method (TERP method), an Iodine Transfer Polymerization method (ITP method), a Reversible Chain Transfer Catalyzed Polymerization method (RTCP method), and a Reversible Complexation Mediated Polymerization method (RCMP method).

Polymerization conditions and the like are not particularly limited. An azo-based radical generator, a peroxide-based radical generator, a photosensitizer, and the like may be added to the reaction system. The polymerization type may be solventless, solution polymerization, emulsion polymerization, or the like. Among others, the polymerization type is preferably solution polymerization, and solution polymerization is more preferably performed in the above-described water-soluble organic solvent which can be blended in the carbon material dispersion. By performing solution polymerization in the water-soluble organic solvent, a resultant solution of the polymer can be blended as it is in the carbon material dispersion.

By polymerizing the monomer 1, the monomer 2, and the monomer 3 by solution polymerization or the like, a desired polymer can be obtained. In addition, after the monomer 1, the monomer 2, and the monomer 3 are polymerized, the amino group derived from the monomer 1 may be converted into a quaternary ammonium salt by adding a halogenated alkyl, such as benzyl chloride, naphthylmethyl chloride, acetynylmethyl chloride, pyrenylmethyl chloride, or naphthylmethyl bromide, to the reaction system. Further, the quaternary ammonium salt may be subjected to ion exchange to form a sulfonimide salt by adding a lithium salt of bis(trifluoromethylsulfone)imide, a lithium salt of bis(heptafluorobutylsulfone)imide, or the like. The dispersant which is used for the present invention can be used without particular restriction in a range where the carbon nanotube can be stabilized by dispersion. As the dispersant, a surfactant which is classified into the anionic, cationic, nonionic, or amphoteric surfactant, or a polymer-type dispersant can be mainly used.

On the other hand, when the liquid medium is a water-soluble organic solvent substantially free of water, the dispersant is preferably a polymeric dispersant. Then, the dispersant is preferably a polymer containing 3 to 55% by mass of a constituent unit (A) derived from a monomer A represented by the following formula (A), 45 to 90% by mass of a constituent unit (C) derived from a monomer C represented by the following formula (C), and 0.5 to 20% by mass of a constituent unit (D) derived from a monomer D copolymerizable with the monomers A and C. 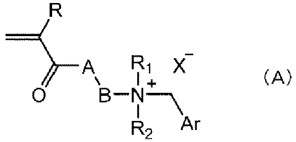 wherein R represents a hydrogen atom or a methyl group, A represents O or NH, B represents an ethylene group or a propylene group, R₁ and R₂ each independently represent a methyl group or an ethyl group, Ar represents a phenyl group, a naphthyl group, an anthracenyl group, or a pyrenyl group, and X represents a chlorine atom, a bromine atom, bis(trifluoromethyl)sulfonimide, or bis(nonaflulorobutanesulfonyl) imide. 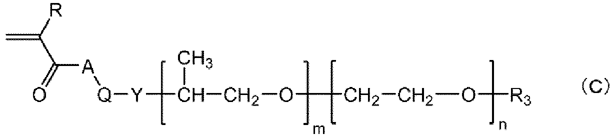 wherein R represents a hydrogen atom or a methyl group, A represents O or NH, Q represents an ethylene group r a methylethylene group, Y represents O, NHCOO, or NHCONH, m and n each independently represent an average number of repeating units of 0 or more and satisfy m + n = 20 to 100, and R₃ represents a C1-18 alkyl group, aryl group, or alkylaryl group.

The constituent unit (A) is a constituent unit derived from the monomer A and having a quaternary ammonium salt group. Adsorption of the quaternary ammonium salt group in the constituent unit (A) to the carbon material is considered to contribute to an improvement in dispersibility of the carbon material into the liquid medium containing the organic solvent. In addition, an aryl methyl group (-CH₂-Ar) is one of the substituents bonding to a nitrogen atom of the quaternary ammonium salt group. Affinity of an aromatic ring in this aryl methyl group to the carbon material is considered to improve the dispersibility of the carbon material. When the carbon numbers of R₁ and R₂ in formula (A) are too large, the aryl methyl group is destabilized due to steric hindrance and the quaternary ammonium salt group is unlikely to be formed. Therefore, R₁ and R₂ in formula (A) need to be each independently a methyl group or an ethyl group.

The quaternary ammonium salt group is an ionic functional group, and therefore the polymer (polymeric dispersant) having the constituent unit (A) having this quaternary ammonium salt group is expected to exhibit electric conductivity due to water adsorption or ionic conductivity. That is, by using the polymer having the constituent unit (A) as the polymeric dispersant, it is expected to make a carbon material dispersion capable of forming a coating film in which lowering of the electric conductivity is suppressed.

The monomer A is preferably a monomer represented by the following formula (A-1). 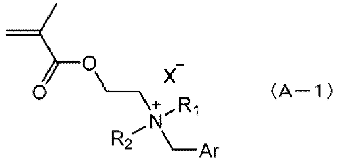 wherein R₁ and R₂ each independently represent a methyl group or an ethyl group, Ar represents a phenyl group, a naphthyl group, an anthracenyl group, or a pyrenyl group, and X represents a chlorine atom, a bromine atom, bis(trifluoromethyl)sulfonimide, or bis(nonafluorobutanesulfonyl)imide.

Examples of the monomer represented by formula (A-1) include dimethylnaphthylmethylammoniumethyl methacrylate chloride, dimethylnaphthylmethylammoniumethyl methacrylate bromide, dimethylnaphthylmethylammoniumethyl methacrylate bis(trifluoromethyl)sulfonimide, dimethylnaphthylmethylammoniumethyl methacrylate bis(nonafluorobutanesulfonyl)imide, diethylnaphthylmethylammoniumethyl methacrylate chloride, diethylnaphthylmethylammoniumethyl methacrylate bromide, diethylnaphthylmethylammoniumethyl methacrylate bis(trifluoromethyl)sulfonimide, diethylnaphthylmethylammoniumethyl methacrylate bis(nonafluorobutanesulfonyl)imide, anthracenylmethyldimethylmethylammoniumethyl methacrylate chloride, anthracenylmethyldimethylmethylammoniumethyl methacrylate bromide, anthracenyldimethylmethylammoniumethyl methacrylate bis(trifluoromethyl)sulfonimide, anthracenyldimethylnaphthylammoniumethyl methacrylate bis(nonafluorobutanesulfonyl)imide, diethylpyrenylmethylammoniumethyl methacrylate chloride, diethylpyrenylmethylammoniumethyl methacrylate bromide, diethylpyrenylmethylammoniumethyl methacrylate bis(trifluoromethyl)sulfonimide, and diethylpyrenylmethylammoniumethyl methacrylate bis(nonafluorobutanesulfonyl)imide.

The polymeric dispersant is preferably a polymer further having a constituent unit (B) derived from a monomer B represented by the following formula (B). By using the polymer further having the constituent unit (B) as the polymeric dispersant, the dispersibility of the carbon material can be enhanced more. Note that by making an amino group in the constituent unit (B) into a quaternary salt, the quaternary ammonium salt group in the constituent unit (A) can be formed. 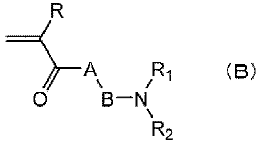 wherein R represents a hydrogen atom or a methyl group, A represents O or NH, B represents an ethylene group or a propylene group, and R₁ and R₂ each independently represent a methyl group or an ethyl group.

The constituent unit (B) has an amino group that is a basic group. Therefore, it is considered that a carboxy group or a phenolic hydroxy group formed on the surface of the carbon material due to oxidation or the like forms an ionic bond with an amino group in the constituent unit (B), and thereby the polymeric dispersant is likely to be adsorbed to the carbon material, so that the dispersibility of the carbon material is improved more. Further, it is considered that the dispersibility of the carbon material is improved more by a synergistic effect with adsorption of the quaternary ammonium salt group in the constituent unit (A) or a multicyclic aromatic group forming the quaternary ammonium salt group to the carbon material.

The monomer B is preferably a monomer represented by the following formula (B-1). 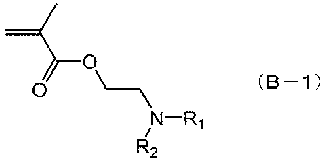 wherein R₁ and R₂ each independently represent a methyl group or an ethyl group.

Examples of the monomer represented by formula (B-1) include dimethylaminoethyl methacrylate and diethylaminoethyl methacrylate.

The constituent unit (C) is a constituent unit derived from the monomer C which is a so-called macromonomer and having a polyalkylene glycol chain. The polymeric dispersant having this constituent unit (C) is a polymer having a structure in which the polyalkylene glycol chain is grafted. Then, the polyalkylene glycol chain is a molecular chain capable of dissolving in the organic solvent which is a dispersion medium. A urethane bond (NHCOO) or a urea bond (NHCONH), represented by Y in formula (C), forms a hydrogen bond with a hydrogen atom forming a hydroxy group or the like which is generated on the surface of the carbon material by modification. Therefore, with regard to the polymeric dispersant, the polyalkylene glycol chain which is a graft chain dissolves in the organic solvent which is a dispersion medium, and the urethane bond (NHCOO) or a urea bond (NHCONH) in the constituent unit (C) and the main chain containing the constituent unit (A) are adsorbed to the carbon material. Then, the dissolved polyalkylene glycol chains function as steric hindrance among carbon materials in the form of particles and repel one another, making it possible to disperse the carbon material in the liquid medium favorably and stably over a long period of time.

In formula (C), m represents an average number of repeating units of a propyleneoxy group (-CH(CH₃)CH₂O-), and n represents an average number of repeating units of an ethyleneoxy group (-CH₂CH₂O-). Then, m and n each independently represent a numerical value of 0 or more and satisfy m + n = 20 to 100, and preferably m + n = 35 to 100. That is, the molecular weight of the polyalkylene glycol chain is preferably 880 to 5,800, and more preferably 1,540 to 5,800. Note that the C1-18 alkyl group represented by R₃ in formula (C) is preferably a methyl group, an ethyl group, a propyl group, a butyl group, a dodecyl group, a stearyl group, a phenyl group, a naphthyl group, or a nonylphenyl group.

The monomer C is preferably represented by the following formula (C-1). 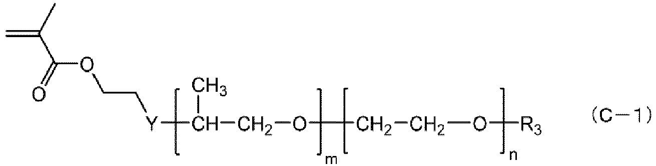 wherein Y represents NHCOO or NHCONH, m and n each independently represent an average number of repeating units of 0 or more and satisfy m + n = 20 to 100, and R₃ represents a C1-18 alkyl group, aryl group, or alkylaryl group.

Examples of the monomer represented by formula (C-1) include a macromonomer having a urethane bond (NHCOO) as Y, the macromonomer obtained by reacting methacryloyloxyethyl isocyanate and a glycol ether monoalkyl ether, such as polyethylene glycol monomethyl ether, polyethylene glycol polypropylene glycol monobutyl ether, polypropylene glycol monomethyl ether, or polyethylene glycol monododecyl ether; and a macromonomer having a urea bond (NHCONH) as Y, the macromonomer obtained by reacting methacryloyloxyethyl isocyanate and a monoether monoamine, such as polyethylene glycol polypropylene glycol monoamine.

In formulas (C) and (C-1), Y is preferably a urea bond (NHCONH) that does not need a catalyst when an isocyanate and an amine are reacted. In addition, the polyalkylene glycol chain in formulas (C) and (C-1) is preferably a random copolymer of propylene oxide and ethylene oxide. Further, in formulas (C) and (C-1), R₃ is preferably a methyl group. Note that the molecular weight of the polyalkylene glycol chain is preferably 2,000 to 4,000, and m and n preferably satisfy m + n = 36 to 90.

The constituent unit (D) is a constituent unit derived from the monomer D copolymerizable with the above-described monomers. Examples of the monomer D include (meth)acrylic acid-based monomers such as (meth)acrylic acid and a (meth)acrylic acid ester; and vinyl monomers such as styrene, vinyltoluene, vinylpyridine, vinylcaprolactone, vinylimidazole, α-methylstyrene, and vinyl acetate. Among others, α-methylstyrene is preferably used as the monomer D from the viewpoint of making it easy to control the molecular weight.

In the polymeric dispersant (polymer), the content of the constituent unit (A) is 3 to 55% by mass, preferably 5 to 50% by mass. When the content of the constituent unit (A) is less than 3% by mass, the adsorption to the carbon material is insufficient. On the other hand, when the content of the constituent unit (A) is more than 55% by mass, the solubility in the organic solvent is insufficient.

In the polymer, the content of the constituent unit (B) is preferably 30% by mass or less, more preferably 2 to 25% by mass. Note that the amine value of the polymer is 100 mgKOH/g or less, preferably 3 to 90 mgKOH/g. When the content of the constituent unit (B) is more than 30% by mass, coloration may occur to the polymer in some cases.

In the polymer, the content of the constituent unit (C) is 45 to 90% by mass, preferably 50 to 85% by mass. That is, the constituent unit (C) is a constituent unit contained in a relatively large amount in the polymer. When a large amount of the constituent unit (C) is contained, thereby the polyalkylene glycol chains are densely disposed. Therefore, when the polymer as the polymeric dispersant is adsorbed to the carbon material, the densely disposed polyalkylene glycol chains function as steric hindrance to inhibit the carbon materials from being into close proximity, thereby making it possible to disperse the carbon material stably.

When the content of the constituent unit (C) in the polymer is less than 45% by mass, sufficient steric hindrance is not formed, making it difficult to enhance the dispersibility. On the other hand, when the content of the constituent unit (C) is more than 90% by mass, the monomer C which is a macromonomer may be left without being polymerized in some cases because the reactivity of the monomer C which is a macromonomer is somewhat poor.

In the polymer, the content of the constituent unit (D) is 0.5 to 20% by mass, preferably 0.6 to 16% by mass. When the content of the constituent unit (D) is more than 0.5% by mass, the function as a dispersant is lowered because the content of the other constituent units is relatively decreased.

It is preferable that the monomer A, the monomer B, and the monomer C be represented by formula (A-1), formula (B-1), and formula (C-1) respectively and the monomer D contain α-methylstyrene because a carbon material dispersion can be made such that the carbon material, even when contained at a high concentration, is more unlikely to reaggregate and is more stably dispersed.

The number average molecular weight (Mw) in terms of polystyrene of the polymer which is used as the polymeric dispersant, measured by gel permeation chromatography (GPC), is 5,000 to 20,000, preferably 10,000 to 15,000. When the number average molecular weight of the polymer is lower than 5,000, the introduction amount of the constituent unit (C) derived from the monomer C which is a macromonomer is small, so that sufficient dispersion stability cannot be obtained. On the other hand, when the number average molecular weight of the polymer is more than 20,000, the amount of the polymeric dispersant necessary for dispersing the carbon material is too large and the viscosity of a resultant carbon material dispersion is excessively high.

The polymer which is the polymeric dispersant can be synthesized by a conventionally known method. For example, the polymer can be synthesized by a conventionally known radical polymerization method; and a living radical polymerization method, such as a polymerization method in which the molecular weight is adjusted using a chain transfer agent such as a thiol, an Atom Transfer Radical Polymerization method (ATRP method), a Reversible Addition-Fragmentation Chain Transfer Polymerization method (RAFT method), a Nitroxide-Mediated Polymerization method (NMP method), an Organotellurium-Mediated Living Radica Polymerization method (TERP method), an Iodine Transfer Polymerization method (ITP method), a Reversible Chain Transfer Catalyzed Polymerization method (RTCP method), or a Reversible Complexation Mediated Polymerization method (RCMP) method. Among others, a living radical polymerization method is preferable because the molecular weight of the main chain can be controlled more uniformly and an A-B block copolymer can be made according to the addition method.

The polymerization may be any of thermal polymerization and photopolymerization, and an azo-based radical generator, a peroxide-based radical generator, a photosensitizer, and the like may be added to the polymerization reaction system. The polymerization type may be any of solventless, solution polymerization, and emulsion polymerization, and among others, solution polymerization is preferable. It is preferable to use, in solution polymerization, the same organic solvent as the organic solvent which is used for the carbon material dispersion because a polymer after the polymerization reaction can be used as it is for the carbon material dispersion.

For example, by subjecting the above-described monomers to solution polymerization, an intended polymer (polymeric dispersant) can be obtained. Note that by adding a halogenated alkyl, such as benzyl chloride, naphthylmethyl chloride, acetynylmethyl chloride, pyrenylmethyl chloride, or naphthylmethyl bromide, to a reaction solution obtained by polymerizing the monomers B to D, an amino group in the constituent unit (B) can be converted into a quaternary ammonium salt to convert the constituent unit (B) into the constituent unit (A). Further, by adding a lithium salt of bis(trifluoromethylsulfone)imide, a lithium salt of bis(heptafluorobutylsulfone)imide, or the like, ion exchange can be performed for the anion (Cl⁻, Br⁻) which forms the quaternary ammonium salt.

The content of the dispersant in terms of solid content based on 100 parts by mass of the carbon material in the raw material and the resultant dispersion is preferably 10 to 500 parts by mass, more preferably 30 to 500 parts by mass. The whole amount of the dispersant may be charged at an initial blending stage, or the dispersant may be charged dividedly in the middle of the step (1). The content of the carbon material in the raw material and the resultant dispersion is preferably 10% by mass or less, more preferably 5% by mass or less. The content of the dispersant in the raw material and the resultant dispersion is preferably 30% by mass or less, more preferably 15% by mass or less. By setting the content of the carbon material and the content of the dispersant to the above-described ranges respectively, a carbon material dispersion in which the carbon material is more stably dispersed can be obtained. When the amount of the dispersant based on the amount of the carbon material is excessively small, the dispersant cannot cover the surface of the carbon material sufficiently, so that dispersibility may be somewhat insufficient in some cases. On the other hand, when the amount of the dispersant based on the amount of the carbon material is excessively large, the viscosity of the carbon material dispersion may be likely to be increased in some cases, and the ratio of the carbon material in the solid content may be relatively lowered in some cases. In addition, when the dispersion is used as an ink or a coating material, physical properties, such as strength and electric conductivity, of a formed coating film may be somewhat lowered in some cases.

### [Liquid Medium]

As the liquid medium, an aqueous medium or an organic solvent can be used. When the liquid medium is an aqueous medium, the carbon material dispersion is an aqueous dispersion. When the liquid medium is an organic solvent, the carbon material dispersion is a solvent-based (oilbased) dispersion.

As the aqueous medium, water or a mixed solvent of water and a water-soluble organic solvent can be used. An aqueous dispersion using an aqueous medium as a liquid medium is a more environment-friendly dispersion. Examples of the water-soluble organic solvent include alcohols, such as methanol, ethanol, and isopropyl alcohol; polyhydric alcohols, such as ethylene glycol, propylene glycol, and glycerin; ethers, such as tetrahydrofuran; glycol ethers, such as diethylene glycol, triethylene glycol, diethylene glycol monomethyl ether, diethylene glycol monobutyl ether, ethylene glycol dimethyl ether, propylene glycol monomethyl ether, propylene glycol monoethyl ether, propylene glycol monopropyl ether, dipropylene glycol monomethyl ether, and tripropylene glycol monomethyl ether; glycol ether esters, such as diethylene glycol monomethyl ether acetate; amides, such as pyrrolidone, N-methylpyrrolidone, dimethyl formamide, dimethyl acetamide, 3-methoxy-N,N-dimethylpropanmide, and 3-butoxy-N,N-dimethylpropanamide; urea-based solvents, such as tetramethyl urea, and dimethyl-1,3-imidazolidinone; sulfur-containing solvents, such as dimethyl sulfoxide and sulfolane; and ionic liquids, such as 1-ethyl-3-methylimidazolium chloride. The content of the water-soluble organic solvent in the dispersion is preferably set to 20% by mass or less, more preferably 10% by mass or less. When the content of the water-soluble organic solvent in the dispersion is more than 20% by mass, the function of the dispersant may be likely to be lowered in some cases.

As the water-soluble organic solvent, isopropyl alcohol (IPA) or ethanol is preferably used. When these water-soluble organic solvents are used, wettability to a substrate or drying performance of a coating film can be improved in using the dispersion as an ink or a coating material.

### [Additives etc.]

An additive, a resin, and the like can further be contained in the wetted mixture and the resultant dispersion. Examples of the additive include a water-soluble dye, a pigment, an ultraviolet absorber, a light stabilizer, an antioxidizing agent, a leveling agent, a defoamer, an antiseptic, a mildew-proofing agent, a photopolymerization initiator, and other pigment dispersants. Examples of the resin include a polyolefin resin, a polyhalogenated olefin resin, a polyester resin, a polyamide resin, a polyimide resin, a polyether resin, a polyvinyl resin, a polystyrene resin, a polyvinyl alcohol resin, a polymethacrylate resin, a polyurethane resin, a polyepoxy resin, a polyphenol resin, a polyurea resin, and a polyethersulfone resin.

In the wetted mixture and the dispersion, a defoamer is preferably contained as an additive according to the apparatuses which are used in the step (1) and the step (2). When a defoamer is contained, foaming during a dispersion treatment can be suppressed, and therefore shear force, collision force, and the like, which are applied during a dispersion treatment, acts effectively, so that a dispersion more excellent in dispersibility can be made.

### [Wetting-and-Mixing Treatment]

In the step (1), the raw material is stirred and mixed using a stirrer, such as, for example, a magnetic stirrer, to obtain the wetted mixture in which each constituent, such as the carbon material, is wetted. Examples of the stirrer include apparatuses such as a magnetic stirrer, a dissolver, a sand grinder, a homogenizer, an ultrasonic homogenizer, an attritor, and a pearl mill. From the viewpoint of simplicity of the process, it is preferable to stir and wet the raw material with a magnetic stirrer, dissolver, or a homogenizer, and it is preferable to disperse the raw material in combination with a high-pressure homogenizer. For example, it is preferable to disperse the raw material with a bead mill using beads having a small particle diameter. In addition, wetting and stirring may be combined with a method of highly dispersing the raw material taking damage to the carbon material, such as a carbon nanotube, into consideration.

### [Carbon Material Dispersion]

Absorbance of the dispersion of the carbon material containing a carbon nanotube gives a gently curve from a wavelength of 300 nm to 1,000 nm. However, this curve (absorbance curve) varies significantly depending on dispersion state of the carbon nanotube. For example, the absorbance on the short wavelength side gives a large value when the amount of finely dispersed carbon nanotube is large. On the other hand, the absorbance on the long wavelength side gives a large value when the amount of the aggregate of the carbon nanotube is large. Accordingly, an absorbance ratio obtained by dividing the absorbance (A_{L}) on the short wavelength side by the absorbance (A_{H}) on the long wavelength side, (A_{L}/A_{H}), well reflects the dispersion state of the carbon material in a liquid medium. Specifically, as the carbon nanotube is dispersed more finely and uniformly, the absorbance ratio is higher, and as the carbon nanotube aggregates more, the absorbance ratio is smaller.

The wavelength W_{M} which is a standard is defined as a median value of the wavelength W_{L} on the short wavelength side and the wavelength W_{M} on the long wavelength side (W_{M} = (W_{L} + W_{H})/2). In a wavelength region near the median value, there is hardly an influence of the dispersion state of the carbon material, and therefore the absorbance at the wavelength W_{M} is suitable as the standard for evaluating the dispersibility of the carbon material with the dilute dispersion.

The wavelength W_{L} on the short wavelength side is arbitrarily selected from within a range of 350 to 550 nm, preferably within a range of 350 to 450 nm, more preferably within a range of 350 to 400 nm. The absorbance at a wavelength within the above-described ranges changes distinctly, and can stably be measured because there is less noise or peculiar peak variation. When the wavelength W_{L} is shorter than 350 nm, the peak varies greatly with the progress of dispersion due to an irregular influence of light absorption and scattering by fine particles, which makes it difficult to use the wavelength W_{L} as an accurate index. On the other, when the wavelength W_{L} is longer than 550 nm, the absorbance changes indistinctly.

The wavelength W_{H} on the long wavelength side is arbitrarily selected from within a range of 650 to 850 nm, preferably within a range of 700 to 850 nm, more preferably within a range of 700 to 800 nm. When the wavelength is within the above-described ranges, the absorbance of particles giving a small proportion of the absorption component and a large proportion of the scattering component can be checked. In addition, there is less noise or peculiar peak variation, so that measurement can stably be performed. When the wavelength W_{H} on the long wavelength side is longer than 850 nm, noise is mixed in the peak, which makes it difficult to measure an accurate value. On the other hand, the range where the wavelength W_{H} on the long wavelength side is shorter than 650 nm is not suitable as the index.

The difference between the wavelength W_{L} and the wavelength W_{H} is preferably 100 nm or more, more preferably 200 nm or more. By setting the difference between the wavelength W_{L} and the wavelength W_{H} to 100 nm or more, the dispersibility of the carbon material can be read more accurately. When the difference between the wavelength W_{L} and the wavelength W_{H} is too small, it may be difficult to evaluate the dispersion state of the carbon material precisely in some cases.

The absorbance of the dispersion varies depending on the content (concentration) of the carbon material. Therefore, the absorbance of a dilute dispersion prepared by diluting the dispersion is measured. As a diluent for diluting the dispersion, a blank solution having the same composition as that of the carbon material dispersion to be an object except that the carbon material is not contained is preferably used. By using such a blank solution, influences of diffusion, reaggregation, and environment of fine particles on the absorbance are suppressed, and the absorbance is made unsusceptible to an influence of a polymeric dispersant, which may be used as a dispersant in some cases, so that the absorbance can be measured more accurately.

To measure the absorbance accurately, it is preferable to set the content of the carbon material in a sample solution (dilute dispersion) within a range of 0.001 to 0.01% by mass usually. When the content is more than 0.01%, the quantity of scattering laser light transmitting during measurement is small, which may make it difficult to perform the measurement accurately in some cases. On the other hand, when the content is less than 0.001% by mass, the value of absorbance is too small, which may make it difficult to perform accurate evaluation or comparison in some cases.

The absorbance at the wavelength W_{M} of the dilute dispersion obtained by diluting the carbon material dispersion with a diluent containing a liquid medium is 1.2 to 2.2, preferably 1.5 to 2.0. When the absorbance at the wavelength W_{M} of the diluted dispersion is less than 1.2, it is difficult to determine the dispersion state. On the other hand, it is difficult to measure an absorbance of higher than 2.2 accurately.

The value of the ratio of absorbance A_{L} at the wavelength W_{L} to absorbance A_{H} at the wavelength W_{H}, (A_{L}/A_{H}), in a dilute dispersion varies according to the wavelengths W_{H} and W_{L}. For example, when the value of "A_{L}/A_{H}" at the wavelength W_{L} = 380 nm and the wavelength W_{H} = 780 nm is "1.60," the value of "A_{L}/A_{H}" at the wavelength W_{L} = 400 nm and the wavelength W_{H} = 700 nm is "1.44," and the value of "A_{L}/A_{H}" at the wavelength W_{L} = 350 nm and the wavelength W_{H} = 800 nm is "1.78." When the value of "A_{L}/A_{H}" at the wavelength W_{L} = 380 nm and the wavelength W_{H} = 780 nm is "1.65," the value of "A_{L}/A_{H}" at the wavelength W_{L} = 400 nm and the wavelength W_{H} = 700 nm is "1.48," and the value of "A_{L}/A_{H}" at the wavelength W_{L} = 350 nm and the wavelength W_{H} = 800 nm is "1.85."

The absorbance at the wavelength W_{L} of the dispersion is a physical property value which is an index of the dispersion state of the carbon material. On the other hand, the absorbance at the wavelength W_{H} of the dispersion is a physical property value which is an index of the aggregation state of the carbon material. By using the wavelength W_{M}, which is a median value of the wavelengths W_{L} and W_{H}, as a standard to obtain the value of the ratio of absorbance A_{L} at the wavelength W_{L} to absorbance A_{H} at the wavelength W_{H}, (A_{L}/A_{H}), for the dilute dispersion obtained by diluting the carbon material dispersion with a diluent containing a liquid medium such that absorbance at the wavelength W_{M} is 1.2 to 2.2, the dispersion state of the carbon material in this dispersion can accurately be evaluated.

When the wavelength W_{L} is 380 nm, the wavelength W_{H} is 780 nm, the wavelength W_{M} is 580 nm, and absorbance at the wavelength W_{M} is 1.5 to 2.0 (preferably, 1.8±0.02) for the dispersion, the ratio of absorbance A_{L} to absorbance A_{H}, (A₃₈₀/A₇₈₀), is preferably 1.60 or more, more preferably 1.65 or more. By setting the value of the absorbance ratio (A_{380/}A₇₈₀) to the above-described ranges, a dispersion substantially free of coarse aggregates and more excellent in viscosity stability can be made even when the types and addition amounts of the carbon material and the dispersant vary.

When the value of the absorbance ratio (A_{380/}A₇₈₀) is too small, the carbon nanotube is not in a state of being dispersed finely and uniformly, and therefore the viscosity stability of the dispersion is low, and a large amount of coarse aggregates are contained. The dispersion of the present invention, wherein the absorbance ratio (A_{380/}A₇₈₀) is 1.40 or more, contains a carbon material containing a carbon nanotube, the carbon material in a state of being dispersed finely and uniformly, therefore have favorable viscosity stability, and is substantially free of a coarse aggregate, and even if the dispersion of the present invention contains fine aggregates, the amount thereof is extremely small.

When the carbon material is dispersed in a liquid medium by a dispersion treatment, a large amount of aggregates of the carbon material are present in the liquid medium at the initial stage of the dispersion treatment, and therefore the absorbance ratio is small. Then, the dispersant is adsorbed to the carbon nanotube with the progress of the dispersion treatment, and the aggregates are gradually disintegrated to increase the absorbance ratio. When the sizes of short sides of the aggregates are less than 100 µm, the absorbance ratio (A₃₈₀/A₇₈₀) becomes 1.60 or more. When the dispersion treatment is further performed, the carbon nano tube is in a state of being dispersed more uniformly in the liquid medium and the absorbance ratio (A_{380/}A₇₈₀) becomes 1.65 or more. However, when the dispersion treatment is performed excessively, carbon nanotubes whose structures are broken reaggregate and the absorbance ratio (A_{380/}A₇₈₀) is lowered to less than 1.40.

The dispersion of the present invention is excellent in viscosity stability (storage stability) because the viscosity is unlikely to change even after the elapse of a long period of time. Specifically, the change rate of the viscosity (mPa·s) at 25°C of the dispersion after the elapse of 10 days under a room temperature (25°C) condition based on the viscosity (mPa·s) at 25°C of the dispersion immediately after preparation (dispersion) is usually 15% or less, preferably 10% or less, more preferably 5% or less.

If aggregates having a short side of 100 µm or larger are present in the dispersion, intrinsic performance, such as electric conductivity and thermal conductivity, of the carbon nanotube is unlikely to be exhibited when the dispersion is applied to various applications; and growth or sedimentation of the aggregates occurs and therefore the viscosity stability and the storage stability are likely to be lowered. For example, when a dispersion containing aggregates having a short side of 100 µm or larger is used as a coating material, there is a tendency that uniform coating is difficult. In contrast, the dispersion of the present invention is substantially free of a coarse aggregate formed by the carbon material containing a carbon nanotube. Specifically, even when the dispersion immediately after preparation (dispersion) and the dispersion after the elapse of 10 days under a room temperature (25°C) condition are observed 5 times at a magnification of 200x using an optical microscope, not an aggregate having a short side of 100 µm or larger is never observed usually. Preferably, the number (average value) of aggregates having a short side of 20 µm or larger is 10 or more per observation. More preferably, the number (average value) of aggregates having a short side of 20 µm or more is one or more and less than 10 per observation, and particularly preferably, not a single aggregate having a short side of 20 µm or more is never observed even when the observation is performed 5 times.

### (Step (2))

The step (2) is a step of subjecting the wetted mixture obtained using a high-pressure homogenizer in the step (1) to a dispersion treatment. By subjecting the wetted mixture to the dispersion treatment, an intended carbon material dispersion can be obtained.

### [High-Pressure Homogenizer]

As the high-pressure homogenizer, at least any one of the high-pressure homogenizer (A1) and the high-pressure homogenizer (A2) is used. The high-pressure homogenizer (A1) is a disperser of a system of allowing the wetted mixtures (liquid samples) jetted by pressurization to collide with each other to form fine particles. The high-pressure homogenizer (A2) is a disperser of a system of introducing a pressurized wetted mixture (liquid sample) into a collision chamber to form fine particles. Examples of the collision chamber of the high-pressure homogenizer (A2) include a collision chamber of a system of allowing a pressurized liquid sample to collide with a wall portion and a ball collision chamber including balls for allowing a pressurized liquid sample to collide therewith. Any of the high-pressure homogenizers is a disperser of a system of allowing a liquid sample to which a treatment pressure has been applied to collide with an object, thereby forming fine particles and then ejecting the liquid sample from an ejection nozzle. By subjecting the wetted mixture to the dispersion treatment using these high-pressure homogenizers, a dispersion in which the number of aggregates is small and which is excellent in viscosity stability can be produced.

Examples of commercially available homogenizers include high-pressure homogenizers "NAGS" series manufactured by JOKOH CO., LTD.; high-pressure homogenizers "Microfluidizer" series manufactured by Powrex Corporation; high-pressure homogenizers "Star Burst" series manufactured by SUGINO MACHINE LIMITED; high-pressure homogenizers manufactured by Yoshida Machinery Co., Ltd.; homogenizers manufactured by SMT CO., LTD.; and high-pressure homogenizers "OMEGA (R)" series manufactured by Ashizawa Finetech Ltd.

The dispersion treatment is performed so as to satisfy the following dispersion condition.

### [Dispersion Condition]

A first treatment is performed X times, wherein the first treatment is such that: a treatment pressure of 1 to 100 MPa is applied to the wetted mixture to form fine particles using any one of the high-pressure homogenizer (A1) and the high-pressure homogenizer (A2); and the wetted mixture is ejected from an ejection nozzle having a nozzle inner diameter of D₁; and then, a second treatment is performed Y times, wherein the second treatment is such that: a treatment pressure of 120 to 250 MPa is applied to the wetted mixture to form fine particles using any one of the high-pressure homogenizer (A1) and the high-pressure homogenizer (A2); and the wetted mixture is ejected from an ejection nozzle having a nozzle inner diameter of D₂, provided that D₁>D₂, X≥2, and 2≤Y≤30.

In the dispersion treatment, the first treatment is performed X times firstly, wherein the first treatment is such that: the treatment pressure is applied to the wetted mixture to form fine particles using any one of the high-pressure homogenizers; and the wetted mixture is ejected from an ejection nozzle having a nozzle inner diameter of D₁. The treatment pressure to be applied to the wetted mixture during the first treatment is 1 to 100 MPa, preferably 2 to 700 MPa. By setting the treatment pressure within the above-described range, a dispersion in which the number of aggregates is small and which is excellent in viscosity stability can be obtained. Then, the wetted mixture formed into fine particles is ejected from the ejection nozzle having a nozzle inner diameter of D₁. The nozzle inner diameter D₁ is preferably 0.15 to 2.0 mm, more preferably 0.15 to 0.8 mm, particularly preferably 0.2 to 0.5 mm. The number of times (X: the number of passes) of the first treatment to be performed is 2 or more. The upper limit of the number of times (X) of the first treatment is not particularly limited but may be 50 or less.

In the dispersion treatment, the second treatment is performed Y times followed by the first treatment, wherein the second treatment is such that: the treatment pressure is applied to the wetted mixture to form fine particles using any one of the high-pressure homogenizers; and the wetted mixture is ejected from an ejection nozzle having a nozzle inner diameter of D₂. The treatment pressure to be applied to the wetted mixture during the second treatment is 120 to 250 MPa, preferably 120 to 170 MPa. When the treatment pressure is too small, a large amount of aggregates are contained in the resultant dispersion, and it is difficult to improve the viscosity stability of the dispersion. Then, the wetted mixture formed into fine particles is ejected from the ejection nozzle having a nozzle inner diameter of D₂. The nozzle inner diameter D₂ is preferably 0.1 to 1.0 mm, more preferably 0.1 to 0.4 mm, further preferably 0.1 to 0.3 mm. The number of times (Y: the number of passes) of the second treatment to be performed is 2 or more and 30 or less, preferably 3 or more and 25 or less. When the number of times (Y) of the second treatment is too large, the resultant dispersion is in an overdispersion state, so that a large amount of aggregates are contained and the viscosity stability cannot be improved.

The nozzle inner diameter D₁ of the ejection nozzle of the high-pressure homogenizer to be used in the first treatment and the nozzle inner diameter D₂ of the ejection nozzle of the high-pressure homogenizer to be used in the second treatment satisfy a relationship of D₁>D₂. That is, the nozzle inner diameter D₁ of the ejection nozzle of the high-pressure homogenizer to be used in the first treatment is larger than the nozzle inner diameter D₂ of the ejection nozzle of the high-pressure homogenizer to be used in the second treatment. As just described above, by performing the first treatment and the second treatment respectively using high-pressure homogenizers each having an ejection nozzle having a different inner diameter, a dispersion in which the number of aggregates is small and which is excellent in viscosity stability can be obtained. The difference between the nozzle diameters D₁ and D₂ is preferably 0.1 mm or more, more preferably 0.15 mm or more. When the difference between the nozzle diameters is small, a dispersion effect may be somewhat deficient in some cases.

When the concentration of the carbon material is adjusted, the number of passes of the dispersion treatment is preferably set according to the types of carbon material and dispersant to be used. For example, the step (1) and the step (2) are preferably performed again after the carbon material is further added to the dispersion obtained in the step (2) and the resultant mixture is stirred to mix the carbon material well in the dispersion. In this case, an appropriate amount of the dispersant based on the total amount of the carbon material in the dispersion to be finally obtained may be preliminarily charged, or a proper amount of the dispersant may be added when the carbon material is further added. Each of the step (1) and the step (2) can be performed once or more. By repeating the treatment as necessary, a high-concentration carbon material dispersion can be produced while the number of passes is reduced efficiently.

### <Product>

In the above-described carbon material dispersion of the present invention, the carbon material containing a carbon nanotube is favorably dispersed without substantially producing a coarse aggregate, and therefore the carbon material dispersion of the present invention is excellent in viscosity stability. For this reason, the following products can be provided making use of such characteristics. Specifically, it is possible to provide any (first product) of products among a paint, an ink, a coating agent, a material for a resin-shaped article, an electrically conductive material, a thermally conductive material, and an antistatic material, each containing the above-described carbon material dispersion. Further, it is possible to provide any (second product) of products of a battery material and a mechanical component, each including a film formed with the above-described carbon material dispersion.

Examples of the method for preparing the paint or the ink include a method in which a solvent, a resin, and various additives and the like are added to the dispersion in such a way as to give the paint composition or the ink composition, and a method in which the dispersion is added to a commercially available paint or ink. Examples of the method for producing a resin-shaped article in which the carbon material containing a carbon nanotube is dispersed include a method in which a resin material in a molten state and the dispersion are mixed, and then a liquid medium is removed, and a method in which the dispersion is added to a finely powdered resin material, and then a liquid medium is removed or the carbon material is deposited.

### Examples

Hereinafter, the present invention will be described specifically based on Examples, but the present invention is not limited to these Examples. Note that "parts" and "%" in Examples and Comparative Examples are each on a mass basis unless otherwise noted.

### <Preparation of Materials>

The following carbon nanotubes (CNT), dispersants, and defoamer were prepared.

### (Carbon Nanotubes (CNT))

- CNT-A: Multi-walled CNT, average diameter 6 to 9 nm, average length 100 to 200 µm, trade name "JENOTUBE 8c," manufactured by JEIO Co., Ltd.
- CNT-B: Multi-walled CNT, average diameter 5 to 7 nm, average length 50 to 150 µm, trade name "JENOTUBE 6A," manufactured by JEIO Co., Ltd.
- CNT-C: Multi-walled CNT, average diameter 30 to 50 nm, average length 5 to 12 µm, trade name "s40," manufactured by Shenzhen Sanshum Nano New Materials Co., Ltd. (SUSN)
- CNT-D: Multi-walled CNT, average diameter 9.5 nm, average length 1.5 µm, trade name "NC7000," manufactured by Nanocyl SA
- CNT-E: Multi-walled CNT, average diameter 14 to 16 nm, average length 90 to 100 µm, trade name "K-nanos 400T," manufactured by Kumho Petrochemical Co., Ltd.
- CNT-F: Single-walled CNT, average diameter 3 to 5 nm, average length 100 to 600 µm, trade name "SG-101," manufactured by Zeon Corporation

### (Dispersant)

- Dispersant a: trade name "DYSPERBYK-2012," manufactured by BYK-Chemie GmbH, solid content 40%
- Dispersant b: trade name "FLOWREN GW-1500," manufactured by Kyoeisha Chemical Co., Ltd., solid content 100%
- Dispersant c: trade name "Dispex Ultra PA 4550," manufactured by BASF SE, solid content 50%
- Dispersant d: trade name "SUNROSE F01MC," manufactured by Nippon Paper Industries Co., Ltd., sodium salt of carboxymethyl cellulose, viscosity of 1%-by-mass aqueous solution 7 to 13 mPa·s, degree of etherification 0.65 to 0.75
- Dispersant e: trade name "DYSPERBYK-9077," manufactured by BYK-Chemie GmbH, solid content 100%

### (Defoamer)

- trade name "BYK-028," manufactured by BYK-Chemie GmbH

### <Production of Dispersant>

Dispersants A1 and A2, dispersant B1, and dispersant C1 were produced according to the following procedures.

### (Dispersant A1)

### (a) Synthesis of Macromonomer

In a reaction apparatus equipped with a stirrer, a reflux condenser, a thermometer, and a dropping funnel, 142.5 parts (0.067 mol) of a one-end-aminated polypropylene glycol polyethylene glycol monomethyl ether copolymer (M41) (trade name "Genamin M41/2000," manufactured by Clariant AG, measured amine value 26.4 mgKOH/g) was placed, and it was stirred. In the dropping funnel, 10.4 parts (0.067 mol) of 2-isocyanatoethyl methacrylate (MOI) (trade name "Karenz MOI," manufactured by Resonac Holdings Corporation) was placed, and it was dropped over 30 minutes in the reaction apparatus cooled in a water bath. Part of the reaction solution was sampled for IR measurement to ascertain disappearance of the absorption of the isocyanate group derived from MOI and generation of a urea bond. In addition, the amine value of the product was 0.2 mgKOH/g to ascertain that the reaction between the amino group and the isocyanate group was almost completed. Note that the amine value was measured by means of an automatic potentiometric titrator using a 0.1 mol/L 2-propanolic hydrochloric acid solution. It was ascertained from those described above that a polypropylene glycol polyethylene glycol copolymer (MC-1) in which a methacryloyl group is bonded to one end thereof was produced. The number average molecular weight (Mn) of MC-1 in terms of polystyrene and polydispersity index (PDI = weight average molecular weight (Mw)/number average molecular weight (Mn)), both measured by gel permeation chromatography (GPC) using tetrahydrofuran (THF) as a developing solvent, were 2,800 and was 1.09, respectively. MC-1 is a macromonomer corresponding to the monomer 2 represented by formula (1), wherein the number n_{H} of repeating units is 1/2 or more of the total number n_{T} of repeating units.

### (b) Synthesis of Dispersant

In a reaction apparatus equipped with a stirrer, a reflux condenser, a thermometer, and a nitrogen introducing tube, 95 parts of diethylene glycol monobutyl ether (BDG), 70 parts of MC-1, 2.5 parts of α-methylstyrene (aMS), 10.5 parts of styrene (St), and 17 parts of 4-vinylpyridine (4VP) were placed, and the resultant mixture was heated to 75°C under nitrogen bubbling. At a point in time when the temperature reached 70°C, 5 parts of dimethyl 2,2'-azobis(isobutyrate) (V-601) (trade name "V-601," manufactured by FUJIFILM Wako Pure Chemical Corporation) was added to perform polymerization at 75°C for 4 hours. Further, 2.5 parts of V-601 was added to perform polymerization at 75°C for 4 hours, and thus a liquid containing a polymer was obtained. Mn, PDI, and the peak top molecular weight (PT) of the polymer were 9,600, 1.83, and 22,700, respectively, and a peak derived from MC-1 used as a raw material was hardly recognized. The amine value (in terms of net content of resin) of the polymer was 86.2 mgKOH/g. The solid content of the liquid containing the polymer, measured using a moisture meter, was 50.4%.

In a reaction apparatus equipped with a stirrer, a reflux condenser, a thermometer, and a dropping funnel, 100 parts of the polymer was placed. After 30 parts of BDG was added thereto for dilution, the resultant mixture was stirred at room temperature for 10 minutes for homogenization to obtain a solution. In the obtained solution, 0.081 mol of the amino group derived from 4VP is present. A solution containing 10.25 g of BDG and 10.25 g (0.081 mol) of benzyl chloride (BzCl) was dropped from the dropping funnel over 30 minutes at room temperature. After the dropping, the temperature was increased to 80°C, and the temperature was kept for 5 hours to obtain a liquid containing a polymer (dispersant A1). The solid content of the obtained liquid containing dispersant A1 was 40.2%. The amine value of dispersant A1 was almost 0 mgKOH/g, and therefore it can be seen that the reaction progressed quantitatively and all the amino groups derived from 4VP were converted into quaternary ammonium salts.

### (Dispersant A2)

In a reaction apparatus equipped with a stirrer, a reflux condenser, a thermometer, and a nitrogen introducing tube, 95.0 parts of BDG, 70 parts of MC-1, 2.5 parts of aMS, 10.4 parts of St, 7.7 parts of methacrylic acid (MA), and 9.4 parts of 4VP were placed, and the resultant mixture was heated to 75°C under nitrogen bubbling. At a point in time when the temperature reached 70°C, 5 parts of V-601 was added to perform polymerization at 75°C for 4 hours. Further, 2.5 parts of V-601 was added to perform polymerization at 75°C for 4 hours, and thus a liquid containing a polymer (dispersant A2) was obtained. Mn, PDI, and PT of dispersant A2 (polymer) were 11,900, 1.88, and 25,900, respectively, and a peak derived from MC-1 used as a raw material was hardly recognized. The amine value (in terms of net content of resin) and acid value (in terms of net content of resin) of dispersant A2 were 50.0 mgKOH/g and 50.0 mgKOH/g, respectively. This polymer is a polymeric dispersant exhibiting amphoteric ionicity, the polymeric dispersant having an amino group and a carboxy group in the structure thereof. The solid content of the liquid containing dispersant A2 was 50.9%.

### (Dispersant B1)

### (a) Synthesis of Macromonomer

In a reaction apparatus equipped with a stirrer, a reflux condenser, a thermometer, and a dropping funnel, 400 parts (0.2 mol) of a one-end aminated polypropylene glycol polyethylene glycol monomethyl ether copolymer (trade name "JEFFAMINE M2005," manufactured by Huntsman Corporation, amine value (measured): 28.05 mgKOH/g) (M2005) and 256.32 parts of propylene glycol monomethyl ether acetate (PGMAc) were placed, and the resultant mixture was stirred at room temperature for 10 minutes for homogenization. In another container, 31.04 parts (0.2 mol) of 2-isocyanatoethyl methacrylate (trade name "Karenz MOI," manufactured by Resonac Holdings Corporation) (MOI) and 31.04 parts of PGMAc were placed to prepare a mixed liquid. The mixed liquid prepared was dropped over 30 minutes in the reaction apparatus using the dropping funnel. Gentle generation of heat was observed from immediately after starting the dropping. Part of the reaction solution was sampled for IR measurement to ascertain disappearance of the absorption of the isocyanate group derived from MOI and generation of a urea bond, and ascertain generation of a macromonomer (A) having an α,β-unsaturated bond. The solid content, measured and calculated after heating the reaction solution at 140°C using a dryer until the weight reached constant weight, was 60.0%. Hereinafter, the solid content was measured and calculated by this method. The obtained macromonomer (A) is referred to as "MAC-1." The number average molecular weight (Mn) of MAC-1 in terms of polystyrene, measured by GPC (developing solvent: tetrahydrofuran), was 3,500. Hereinafter, the molecular weight of each polymer was measured under this condition.

### (b) Synthesis of Polymeric Dispersant

In a reaction apparatus equipped with a stirrer, a reflux condenser, a thermometer, and a nitrogen introducing tube, 30.8 parts of PGMAc, 179.6 parts of MAC-1, 3.0 parts of α-methylstyrene (αMS), 25.2 parts of styrene (St), and 18.0 parts of 2-(N,N-dimethylamino)ethyl methacrylate (DMAEMA) were placed, and the resultant mixture was heated to 70°C under nitrogen bubbling. Then, 3.0 parts of dimethyl 2,2'-azobis(isobutyrate) (trade name "V-601," manufactured by FUJIFILM Wako Pure Chemical Corporation) (V-601) was added to perform polymerization at 70°C for 4 hours. Further, 0.5 parts of V-601 was added to perform polymerization at 70°C for 4 hours, and thus a solution of a polymer (dispersant B1) was obtained. The number average molecular weight (Mn), polydispersity index (dispersity (PDI)) of dispersant B1 (polymer) were 6,400 and 2.2, respectively, and a peak derived from MAC-1 used as a raw material was hardly recognized. The solid content of the solution containing dispersant B1 was 60.8%. The amine value of the polymer, measured using an automatic potentiometric titrator and using a 0.1 N hydrochloric acid/isopropanol solution as a titrant, was 41.9 mgKOH/g.

### (Dispersant C1)

Carboxymethyl cellulose sodium salt was produced using a known method. Specifically, in a 1 L stainless steel container equipped with a stirrer, 400 g of isopropyl alcohol (IPA) and 60 g of water were placed, and 10 g of sodium hydroxide (purity 98%) was put thereinto while the stainless steel container was cooled with a water bath. The solution was cooled to 25°C or lower, and then 20 g of pulverized pulp was put thereinto under stirring. Thereafter, stirring-and-mixing was continued at 15 to 25°C for 60 minutes (mercerization) to prepare alkali cellulose. Subsequently, 30 g of a mixed solution of monochloroacetic acid/isopropyl alcohol = 1:2 was put into the stainless steel container under stirring while the stainless steel container was cooled to keep the temperature at 15 to 25°C, and the resultant solution was stirred and mixed for 15 minutes. Subsequently, the temperature of the solution was increased to 70°C over about 30 minutes under stirring while the stainless steel container was warmed with a hot water bath, and the stirring was continued to perform etherification reaction while the temperature was kept at 65 to 75°C for 120 minutes after the temperature increase. After the reaction was completed, unreacted sodium hydroxide was neutralized with acetic acid to separate a product, and then the product was washed with a 70% aqueous solution of methanol to remove by-products. The product was dried and pulverized to obtain carboxymethyl cellulose sodium salt (C1). The viscosity of a 1%-by-mass aqueous solution and degree of etherification (DS) of the obtained carboxymethyl cellulose sodium salt were 31 mPa·s and 0.84, respectively.

The degree of etherification was measured with reference to Testing Methods for JIS-related Materials of Synthetic Detergents described in Journal of Japan Oil Chemist's Society 38(11), 962-967(1989). Specifically, about 1 g of carboxymethyl cellulose sodium salt was precisely weighed and placed in a porcelain crucible, and then heated at a temperature (about 550 to 590°C) not exceeding 600°C for 1 hour for ashing. The ash was cooled to room temperature and then transferred to a 500 mL beaker together with the crucible to add 250 ml of water. Then, 50 mL of a 0.05 mol/L sulfuric acid aqueous solution was added, and then boiling was performed for 30 minutes. After cooling was performed to room temperature, unreacted acid was titrated using 0.1 mol/L sodium hydroxide. Phenolphthalein was used as an indicator. The degree of etherification (DS) was calculated by the following formula, assuming the amount of 0.1 mol/L sodium hydroxide used for the titration to be "X" mL.

### Degree of etherification (DS) = 162X/(10000 - 80X)

### <Wetting Apparatus and Disperser>

The following wetting apparatuses and dispersers were prepared.
- Wetting apparatus α1: 1/4G sand grinder mill, manufactured by Aimex Co., Ltd.
- Wetting apparatus α2: homogenizer, manufactured by SMT CO., LTD.
- Disperser A1: high-pressure homogenizer, manufactured by JOKOH CO., LTD., a high-pressure homogenizer of a system of allowing liquid samples jetted by pressurization to collide with each other to form fine particles
- Disperser A2: high-pressure homogenizer, manufactured by SUGINO MACHINE LIMITED, a high-pressure homogenizer of a system of introducing a pressurized liquid sample into a collision chamber to form fine particles

### <Measurement and Evaluation Methods>

### (Measurement of Absorbance and Calculation of Absorbance Ratio)

A blank solution having the same composition as that of the dispersion except that the carbon material is not contained was prepared. After a base line was measured using the prepared blank solution, the absorbance of the sample solution was measured. The absorbance of the sample solution was measured using a spectrophotometer (trade name "Hitachi Spectrophotometer U-3310," manufactured by Hitachi High-Tech Corporation) equipped including a quartz cell having an optical path length of 10 mm. As for dilution with the blank solution, a calibration curve is created by plotting the absorbance at a wavelength of 580 nm against changes in dilution ratio to calculate a dilution ratio where the absorbance is 1.8±0.02, and a dispersion diluted to an intended concentration was prepared. In addition, it is also possible to perform dispersion after adjusting the carbon constituent concentration as intended at a stage before dispersing the carbon material or after adjusting the carbon constituent concentration so as to satisfy the above-described absorbance at an initial blending stage. The specific method for preparing the sample solution was as follows: firstly, the dispersion is taken in a polyethylene bottle, and an appropriate amount of the blank solution was added based on the dilution ratio determined from the calibration curve; the resultant mixture was stirred for 30 seconds using Vortex Mixer (manufactured by Scientific Industries, Inc.) to obtain the sample solution such that absorbance A₅₈₀ at a wavelength of 580 nm is 1.8±0.02. Absorbance A₃₈₀ at a wavelength of 380 nm and absorbance A₇₈₀ at a wavelength of 780 nm of the obtained sample solution were measured and an absorbance ratio (A₃₈₀/A₇₈₀) was calculated. Note that as for a dispersion prepared using a highly volatile organic solvent, the absorbance was measured putting a lid on the quartz cell.

### (Evaluation of Dispersion)

### [Measurement of Viscosity and Evaluation of Viscosity Stability]

The viscosity was measured for the dispersion immediately after dispersion and the dispersion after 10 days (after being left to stand at room temperature for 10 days) using an E-type viscometer including a rotor of 1°34' × R24 under a condition of a temperature of 25°C and a rotor revolution rate of 100 rpm. Note that as for a dispersion having a viscosity of lower than 25 mPa·s, the viscosity was measured using trade name "VISCOMETER TVE-25L," (manufactured by Toki Sangyo Co., Ltd.); and as for a dispersion having a viscosity of 25 mPa·s or higher, the viscosity was measured using trade name "VISCOMETER TVE-25H, " (manufactured by Toki Sangyo Co., Ltd.). The viscosity stability of the dispersion was evaluated according to the evaluation criteria described below.
Excellent: the viscosity change rate after 10 days based on the viscosity immediately after dispersion is less than 5%
Good: the viscosity change rate after 10 days based on the viscosity immediately after dispersion is 5% or more and less than 10%
Fair: the viscosity change rate after 10 days based on the viscosity immediately after dispersion is 10% or more and less than 15%
Poor: the viscosity change rate after 10 days based on the viscosity immediately after dispersion is 15% or more

### [Observation of Aggregates]

The dispersion was taken in a polyethylene bottle and diluted by adding the blank solution in such a way as to make the concentration of the carbon material 0.1% by mass. The resultant mixture was stirred for 30 seconds using a Vortex mixer (manufactured by Scientific Industries, Inc.) to obtain a diluted solution. Onto a microscope slide, 30 µL of the diluted solution obtained was dropped, and a cover slip was put thereon to observe (200x) whether or not an aggregate was present using an optical microscope. A sample obtained by dropping the diluted solution onto a microscope slide was prepared 5 times for each of the dispersion immediately after dispersion and the dispersion after 10 days (after being left to stand at room temperature for 10 days), and the samples were observed to evaluate whether or not an aggregate was present according to the evaluation criteria described below.
Excellent: an aggregate having a short side of 20 µm or longer is not observed in 5 observations.
Good: the number (average value) of aggregates having a short side of 20 µm or longer is one or more and less than 10 per observation, and an aggregate having a short side of 100 µm or longer is not observed in 5 observations.
Fair: the number (average value) of aggregates having a short side of 20 µm or longer is 10 or more per observation, and an aggregate having a short side of 100 µm or longer is not observed in Sobservations.
Poor: one or more aggregates having a short side of 100 µm or longer are observed in 5 observations.

### <Preparation and Evaluation (1) of Dispersion>

### (Examples 1 to 30 and Comparative Examples 1 to 26)

Each constituent (other than CNT) of the type and amount shown in Tables 1-1 and 1-2 was placed in a polyethylene cup having a volume of 500 mL. The resultant mixture was stirred until the mixture became uniform, and then CNT of the type and amount shown in Tables 1-1 and 1-2 was added, and the resultant mixture was further stirred. A stirring bar was placed in the polyethylene cup, and the mixture was stirred for 12 hours using a magnetic stirrer (written as "Stirrer" in the tables) to obtain a wetted mixture. The resultant wetted mixture was subjected to the first treatment using a disperser of the type shown in Tables 2-1 and 2-2 under the conditions shown in Tables 2-1 and 2-2. Thereafter, the wetted mixture was subjected to the second treatment using a disperser of the type shown in Tables 2-1 and 2-2 under the conditions shown in Tables 2-1 and 2-2, and thus a dispersion was obtained. Results of measurement of viscosity, results of evaluation of viscosity stability, and results of observation of aggregates for the obtained dispersion are shown in Tables 3-1 and 3-2.

**Table 1-1**

| | CNT | | Dispersant | | Water |
|---|---|---|---|---|---|
| | Type | Amount (parts) | Type | Amount (parts) | Amount (parts) |
| Example 1 | A | 2.0 | a | 10.0 | 188.0 |
| Example 2 | A | 2.0 | a | 10.0 | 188.0 |
| Example 3 | A | 2.0 | a | 10.0 | 188.0 |
| Example 4 | A | 2.0 | a | 10.0 | 188.0 |
| Example 5 | A | 2.0 | a | 10.0 | 188.0 |
| Example 6 | A | 2.0 | A1 | 10.0 | 188.0 |
| Example 7 | A | 2.0 | A2 | 8.0 | 190.0 |
| Example 8 | A | 2.0 | d | 2.0 | 196.0 |
| Example 9 | A | 2.0 | C1 | 1.0 | 197.0 |
| Example 10 | A | 2.0 | a | 10.0 | 188.0 |
| Example 11 | A | 2.0 | a | 10.0 | 188.0 |
| Example 12 | A | 2.0 | a | 10.0 | 188.0 |
| Example 13 | A | 2.0 | a | 10.0 | 188.0 |
| Example 14 | A | 2.0 | a | 10.0 | 188.0 |
| Example 15 | B | 2.0 | a | 12.5 | 185.5 |
| Example 16 | B | 2.0 | a | 12.5 | 185.5 |
| Example 17 | B | 2.0 | a | 12.5 | 185.5 |
| Example 18 | B | 2.0 | a | 12.5 | 185.5 |
| Example 19 | B | 2.0 | a | 12.5 | 185.5 |
| Example 20 | B | 2.0 | a | 12.5 | 185.5 |
| Example 21 | B | 2.0 | a | 12.5 | 185.5 |
| Example 22 | B | 2.0 | a | 12.5 | 185.5 |
| Example 23 | B | 2.0 | a | 12.5 | 185.5 |
| Example 24 | C | 2.0 | a | 2.0 | 196.0 |
| Example 25 | C | 2.0 | b | 0.8 | 197.2 |
| Example 26 | D | 2.0 | a | 5.0 | 193.0 |
| Example 27 | E | 2.0 | a | 5.0 | 193.0 |
| Example 28 | F | 0.8 | c | 4.8 | 194.4 |

**Table 1-2**

| | CNT | | Dispersant | | Water |
|---|---|---|---|---|---|
| | Type | Amount (parts) | Type | Amount (parts) | Amount (parts) |
| Comparative Example 1 | A | 2.0 | a | 10.0 | 188.0 |
| Comparative Example 2 | A | 2.0 | A2 | 8.0 | 190.0 |
| Comparative Example 3 | A | 2.0 | d | 2.0 | 196.0 |
| Comparative Example 4 | A | 2.0 | a | 10.0 | 188.0 |
| Comparative Example 5 | A | 2.0 | a | 10.0 | 188.0 |
| Comparative Example 6 | A | 2.0 | a | 10.0 | 188.0 |
| Comparative Example 7 | A | 2.0 | a | 10.0 | 188.0 |
| Comparative Example 8 | A | 2.0 | a | 10.0 | 188.0 |
| Comparative Example 9 | A | 2.0 | a | 10.0 | 188.0 |
| Comparative Example 10 | A | 2.0 | a | 10.0 | 188.0 |
| Comparative Example 11 | A | 2.0 | a | 10.0 | 188.0 |
| Comparative Example 12 | A | 2.0 | a | 10.0 | 188.0 |
| Comparative Example 13 | B | 2.0 | a | 12.5 | 185.5 |
| Comparative Example 14 | B | 2.0 | a | 12.5 | 185.5 |
| Comparative Example 15 | B | 2.0 | a | 12.5 | 185.5 |
| Comparative Example 16 | B | 2.0 | a | 12.5 | 185.5 |
| Comparative Example 17 | B | 2.0 | a | 12.5 | 185.5 |
| Comparative Example 18 | B | 2.0 | a | 12.5 | 185.5 |
| Comparative Example 19 | B | 2.0 | a | 12.5 | 185.5 |
| Comparative Example 20 | B | 2.0 | a | 12.5 | 185.5 |
| Comparative Example 21 | B | 2.0 | a | 12.5 | 185.5 |
| Comparative Example 22 | B | 2.0 | a | 12.5 | 185.5 |
| Comparative Example 23 | A | 2.0 | a | 10.0 | 188.0 |
| Comparative Example 24 | B | 2.0 | a | 12.5 | 185.5 |
| Example 29 | A | 2.0 | a | 10.0 | 188.0 |
| Comparative Example 25 | A | 2.0 | a | 10.0 | 188.0 |
| Example 30 | B | 2.0 | a | 12.5 | 185.5 |
| Comparative Example 26 | B | 2.0 | a | 12.5 | 185.5 |

**Table 2-1**

| | Wetting step | | Dispersion step | | | | | | | | X+Y (passes) |
|---|---|---|---|---|---|---|---|---|---|---|---|
| | | | First treatment | | | | Second treatment | | | | |
| | Apparatus | Time (h) | Disperser | Nozzle inner diameter D₁ (mm) | Treatment pressure (MPa) | Number of passes X (passes) | Disperser | Nozzle inner diameter D₂ (mm) | Treatment pressure (MPa) | Number of passes Y (passes) | |
| Example 1 | Stirrer | 12 | A1 | 0.3 | 2-50 | 2 | A2 | 0.1 | 150 | 3 | 5 |
| Example 2 | Stirrer | 12 | A1 | 0.3 | 2-50 | 10 | A2 | 0.1 | 150 | 3 | 13 |
| Example 3 | Stirrer | 12 | A1 | 0.3 | 2-50 | 2 | A2 | 0.1 | 150 | 7 | 9 |
| Example 4 | Stirrer | 12 | A1 | 0.3 | 2-50 | 10 | A2 | 0.1 | 150 | 7 | 17 |
| Example 5 | Stirrer | 12 | A1 | 0.3 | 2-50 | 2 | A2 | 0.1 | 150 | 5 | 7 |
| Example 6 | Stirrer | 12 | A1 | 0.3 | 2-50 | 2 | A2 | 0.1 | 150 | 5 | 7 |
| Example 7 | Stirrer | 12 | A1 | 0.3 | 2-50 | 2 | A2 | 0.1 | 150 | 5 | 7 |
| Example 8 | Stirrer | 12 | A1 | 0.3 | 2-50 | 2 | A2 | 0.1 | 150 | 5 | 7 |
| Example 9 | Stirrer | 12 | A1 | 0.3 | 2-50 | 2 | A2 | 0.1 | 150 | 5 | 7 |
| Example 10 | Stirrer | 12 | A2 | 0.3 | 25 | 2 | A1 | 0.15 | 120-140 | 7 | 9 |
| Example 11 | Stirrer | 12 | A1 | 0.3 | 2-50 | 2 | A1 | 0.15 | 120-140 | 7 | 9 |
| Example 12 | Stirrer | 12 | A1 | 0.44 | 2-50 | 2 | A1 | 0.15 | 120-140 | 7 | 9 |
| Example 13 | Stirrer | 12 | A2 | 0.3 | 25 | 2 | A2 | 0.1 | 150 | 7 | 9 |
| Example 14 | Stirrer | 12 | A1 | 0.44 | 2-50 | 2 | A2 | 0.1 | 150 | 7 | 9 |
| Example 15 | Stirrer | 12 | A1 | 0.3 | 2-50 | 2 | A2 | 0.1 | 150 | 5 | 7 |
| Example 16 | Stirrer | 12 | A1 | 0.3 | 2-50 | 10 | A2 | 0.1 | 150 | 5 | 15 |
| Example 17 | Stirrer | 12 | A1 | 0.3 | 2-50 | 2 | A2 | 0.1 | 150 | 10 | 12 |
| Example 18 | Stirrer | 12 | A1 | 0.3 | 2-50 | 10 | A2 | 0.1 | 150 | 10 | 20 |
| Example 19 | Stirrer | 12 | A2 | 0.3 | 25 | 2 | A1 | 0.15 | 120-140 | 10 | 12 |
| Example 20 | Stirrer | 12 | A1 | 0.3 | 2-50 | 2 | A1 | 0.15 | 120-140 | 10 | 12 |
| Example 21 | Stirrer | 12 | A1 | 0.44 | 2-50 | 2 | A1 | 0.15 | 120-140 | 10 | 12 |
| Example 22 | Stirrer | 12 | A2 | 0.3 | 25 | 2 | A2 | 0.1 | 150 | 10 | 12 |
| Example 23 | Stirrer | 12 | A1 | 0.44 | 2-50 | 2 | A2 | 0.1 | 150 | 10 | 12 |
| Example 24 | Stirrer | 12 | A1 | 0.3 | 2-50 | 2 | A2 | 0.1 | 150 | 2 | 4 |
| Example 25 | Stirrer | 12 | A1 | 0.3 | 2-50 | 2 | A2 | 0.1 | 150 | 2 | 4 |
| Example 26 | Stirrer | 12 | A1 | 0.3 | 2-50 | 2 | A2 | 0.1 | 150 | 7 | 9 |
| Example 27 | Stirrer | 12 | A1 | 0.3 | 2-50 | 2 | A2 | 0.1 | 150 | 3 | 5 |
| Example 28 | Stirrer | 12 | A1 | 0.3 | 2-50 | 2 | A2 | 0.1 | 150 | 5 | 7 |

**Table 2-2**

| | Wetting step | | Dispersion step | | | | | | | | X+Y (passes) |
|---|---|---|---|---|---|---|---|---|---|---|---|
| | | | First treatment | | | | Second treatment | | | | |
| | Apparatus | Time (h) | Disperser | Nozzle inner diameter D₁ (mm) | Treatment pressure (MPa) | Number of passes X (passes) | Disperser | Nozzle inner diameter D₂ (mm) | Treatment pressure (MPa) | Number of passes Y (passes) | |
| Comparative Example 1 | Stirrer | 12 | A1 | 0.3 | 2-50 | 2 | - | - | - | - | 2 |
| Comparative Example 2 | Stirrer | 12 | A1 | 0.3 | 2-50 | 2 | - | - | - | - | 2 |
| Comparative Example 3 | Stirrer | 12 | A1 | 0.3 | 2-50 | 2 | - | - | - | - | 2 |
| Comparative Example 4 | Stirrer | 12 | A1 | 0.3 | 2-50 | 30 | - | - | - | - | 30 |
| Comparative Example 5 | Stirrer | 12 | A2 | 0.3 | 25 | 2 | - | - | - | - | 2 |
| Comparative Example 6 | Stirrer | 12 | A2 | 0.3 | 25 | 30 | - | - | - | - | 30 |
| Comparative Example 7 | Stirrer | 12 | A2 | 0.3 | 25 | 2 | A1 | 0.44 | 2-50 | 7 | 9 |
| Comparative Example 8 | Stirrer | 12 | A1 | 0.3 | 2-50 | 2 | A1 | 0.44 | 2-50 | 7 | 9 |
| Comparative Example 9 | Stirrer | 12 | A1 | 0.44 | 2-50 | 2 | A1 | 0.3 | 2-50 | 7 | 9 |
| Comparative Example 10 | Stirrer | 12 | A1 | 0.44 | 2-50 | 2 | A2 | 0.3 | 25 | 7 | 9 |
| Comparative Example 11 | Stirrer | 12 | A2 | 0.3 | 25 | 2 | A1 | 0.3 | 2-50 | 7 | 9 |
| Comparative Example 12 | Stirrer | 12 | A1 | 0.3 | 2-50 | 2 | A2 | 0.3 | 25 | 7 | 9 |
| Comparative Example 13 | Stirrer | 12 | A1 | 0.3 | 2-50 | 2 | - | - | - | - | 2 |
| Comparative Example 14 | Stirrer | 12 | A1 | 0.3 | 2-50 | 30 | - | - | - | - | 30 |
| Comparative Example 15 | Stirrer | 12 | A2 | 0.3 | 25 | 2 | - | - | - | - | 2 |
| Comparative Example 16 | Stirrer | 12 | A2 | 0.3 | 25 | 30 | - | - | - | - | 30 |
| Comparative Example 17 | Stirrer | 12 | A2 | 0.3 | 25 | 2 | A1 | 0.44 | 2-50 | 10 | 12 |
| Comparative Example 18 | Stirrer | 12 | A1 | 0.3 | 2-50 | 2 | A1 | 0.44 | 2-50 | 10 | 12 |
| Comparative Example 19 | Stirrer | 12 | A1 | 0.44 | 2-50 | 2 | A1 | 0.3 | 2-50 | 10 | 12 |
| Comparative Example 20 | Stirrer | 12 | A1 | 0.44 | 2-50 | 2 | A2 | 0.3 | 25 | 10 | 12 |
| Comparative Example 21 | Stirrer | 12 | A2 | 0.3 | 25 | 2 | A1 | 0.3 | 2-50 | 10 | 12 |
| Comparative Example 22 | Stirrer | 12 | A1 | 0.3 | 2-50 | 2 | A2 | 0.3 | 25 | 10 | 12 |
| Comparative Example 23 | Stirrer | 12 | A2 | 0.1 | 150 | 3 | - | - | - | - | 3 |
| Comparative Example 24 | Stirrer | 12 | A2 | 0.1 | 150 | 3 | - | - | - | - | 3 |
| Example 29 | Stirrer | 12 | A1 | 0.3 | 2-50 | 30 | A2 | 0.1 | 150 | 3 | 33 |
| Comparative Example 25 | Stirrer | 12 | A1 | 0.3 | 2-50 | 2 | A2 | 0.1 | 150 | 40 | 42 |
| Example 30 | Stirrer | 12 | A1 | 0.3 | 2-50 | 30 | A2 | 0.1 | 150 | 5 | 35 |
| Comparative Example 26 | Stirrer | 12 | A1 | 0.3 | 2-50 | 2 | A2 | 0.1 | 150 | 40 | 42 |

**Table 3-1**

| | Viscosity (mPa·s) | | Viscosity stability | Observation of aggregates |
|---|---|---|---|---|
| | Immediately after dispersion | After 10 days | | |
| Example 1 | 28.9 | 27.8 | Excellent | Good |
| Example 2 | 25.1 | 24.5 | Excellent | Good |
| Example 3 | 8.7 | 8.6 | Excellent | Excellent |
| Example 4 | 8.1 | 8.0 | Excellent | Excellent |
| Example 5 | 9.6 | 9.4 | Excellent | Good |
| Example 6 | 16.8 | 16.6 | Excellent | Excellent |
| Example 7 | 14.9 | 14.8 | Excellent | Excellent |
| Example 8 | 118.3 | 119.1 | Excellent | Good |
| Example 9 | 168.8 | 171.1 | Excellent | Excellent |
| Example 10 | 9.0 | 8.7 | Excellent | Excellent |
| Example 11 | 9.2 | 9.0 | Excellent | Excellent |
| Example 12 | 7.3 | 7.2 | Excellent | Excellent |
| Example 13 | 8.4 | 8.3 | Excellent | Excellent |
| Example 14 | 6.1 | 6.0 | Excellent | Excellent |
| Example 15 | 46.1 | 45.7 | Excellent | Good |
| Example 16 | 42.7 | 41.6 | Excellent | Good |
| Example 17 | 7.2 | 7.1 | Excellent | Excellent |
| Example 18 | 7.0 | 7.0 | Excellent | Excellent |
| Example 19 | 7.7 | 7.6 | Excellent | Excellent |
| Example 20 | 8.1 | 8.0 | Excellent | Excellent |
| Example 21 | 5.7 | 5.5 | Excellent | Excellent |
| Example 22 | 6.3 | 6.2 | Excellent | Excellent |
| Example 23 | 5.0 | 5.0 | Excellent | Excellent |
| Example 24 | 2.1 | 2.1 | Excellent | Excellent |
| Example 25 | 1.1 | 1.1 | Excellent | Excellent |
| Example 26 | 5.3 | 5.1 | Excellent | Excellent |
| Example 27 | 4.3 | 4.1 | Excellent | Excellent |
| Example 28 | 41.1 | 42.5 | Excellent | Good |

**Table 3-2**

| | Viscosity (mPa·s) | | Viscosity stability | Observation of aggregates |
|---|---|---|---|---|
| | Immediately after dispersion | After 10 days | | |
| Comparative Example 1 | 38.7 | 55.1 | Poor | Poor |
| Comparative Example 2 | 91.5 | 106.2 | Poor | Poor |
| Comparative Example 3 | 194.9 | 161.7 | Poor | Poor |
| Comparative Example 4 | 45.0 | 63.4 | Poor | Poor |
| Comparative Example 5 | 36.5 | 52.2 | Poor | Poor |
| Comparative Example 6 | 43.1 | 60.1 | Poor | Poor |
| Comparative Example 7 | 41.8 | 49.7 | Poor | Poor |
| Comparative Example 8 | 40.7 | 47.7 | Poor | Poor |
| Comparative Example 9 | 39.6 | 47.4 | Poor | Poor |
| Comparative Example 10 | 40.3 | 48.1 | Poor | Poor |
| Comparative Example 11 | 42.0 | 50.8 | Poor | Poor |
| Comparative Example 12 | 42.1 | 50.3 | Poor | Poor |
| Comparative Example 13 | 67.1 | 79.7 | Poor | Poor |
| Comparative Example 14 | 76.5 | 89.9 | Poor | Poor |
| Comparative Example 15 | 63.8 | 76.5 | Poor | Poor |
| Comparative Example 16 | 74.9 | 90.4 | Poor | Poor |
| Comparative Example 17 | 71.1 | 83.8 | Poor | Poor |
| Comparative Example 18 | 69.3 | 80.4 | Poor | Poor |
| Comparative Example 19 | 67.4 | 79.1 | Poor | Poor |
| Comparative Example 20 | 68.0 | 79.1 | Poor | Poor |
| Comparative Example 21 | 71.1 | 84.4 | Poor | Poor |
| Comparative Example 22 | 72.2 | 87.2 | Poor | Poor |
| Comparative Example 23 | - | - | - | - |
| Comparative Example 24 | - | - | - | - |
| Example 29 | 23.8 | 23.8 | Excellent | Good |
| Comparative Example 25 | 16.1 | 22.0 | Poor | Poor |
| Example 30 | 41.0 | 39.8 | Excellent | Good |
| Comparative Example 26 | 38.2 | 50.8 | Poor | Poor |

### <Preparation and Evaluation (2) of Dispersion>

### (Comparative Example 27)

Each constituent (other than CNT) of the type and amount shown in Table 4 was placed in a container of a 1/4G sand grinder mill (manufactured by AIMEX Corporation). The resultant mixture was stirred with a dissolver until the mixture became uniform, and then CNT of the type and amount shown in Table 4 was added, and the resultant mixture was further stirred. Then, 1,000 parts of zirconia beads having an average diameter of 2.0 mm was added thereto, and a wetting step for the time shown in Table 5 was performed under stirring with a rate of 900 rpm using a sand grinder mill. Thereafter, the zirconia beads were separated and removed to obtain a wetted mixture. Results of viscosity measurement, results of viscosity stability evaluation, and results of aggregate observation for the resultant wetted mixture are shown in Table 6.

### (Example 31)

Each constituent (other than CNT) of the type and amount shown in Table 4 was placed in a container of a 1/4G sand grinder mill (manufactured by AIMEX Corporation). The resultant mixture was stirred with a dissolver until the mixture became uniform, and then CNT of the type and amount shown in Table 4 was added, and the resultant mixture was further stirred. Then, 1,000 parts of zirconia beads having an average diameter of 2.0 mm was added thereto, and a wetting step for the time shown in Table 5 was performed under stirring with a rate of 900 rpm using a sand grinder mill. Thereafter, the zirconia beads were separated and removed to obtain a wetted mixture. The resultant wetted mixture was subjected to the first treatment using a disperser of the type shown in Table 5 under the conditions shown in Table 5. Thereafter, the wetted mixture was subjected to the second treatment using a disperser of the type shown in Table 5 under the conditions shown in Table 5 to obtain a dispersion. Results of viscosity measurement, results of viscosity stability evaluation, and results of aggregate observation for the obtained dispersion are shown in Table 6.

### (Example 32)

Each constituent (other than CNT) of the type and amount shown in Table 4 was placed in a polyethylene cup having a volume of 500 mL. The resultant mixture was stirred until the mixture became uniform, and then CNT of the type and amount shown in Table 4 was added, and the resultant mixture was further stirred. A stirring bar was placed in the polyethylene cup, and the mixture was stirred for 1 hour using a magnetic stirrer and then treated twice with a homogenizer (manufactured by SMT CO., LTD.) to obtain a wetted mixture. The resultant wetted mixture was subjected to the first treatment using a disperser of the type shown in Table 5 under the conditions shown in Table 5. Thereafter, the wetted mixture was subjected to the second treatment using a disperser of the type shown in Table 5 under the conditions shown in Table 5 to obtain a dispersion. Results of viscosity measurement, results of viscosity stability evaluation, and results of aggregate observation for the obtained dispersion are shown in Table 6.

### (Examples 33 and 34)

Each constituent (other than CNT) of the type and amount shown in Table 4 was placed in a polyethylene cup having a volume of 500 mL. The resultant mixture was stirred until the mixture became uniform, and then CNT of the type and amount shown in Table 4 was added, and the resultant mixture was further stirred. A stirring bar was placed in the polyethylene cup, and the mixture was stirred for 12 hour using a magnetic stirrer to obtain a wetted mixture. The resultant wetted mixture was subjected to the first treatment using a disperser of the type shown in Table 5 under the conditions shown in Table 5. Thereafter, the wetted mixture was subjected to the second treatment using a disperser of the type shown in Table 5 under the conditions shown in Table 5 to obtain a dispersion. Results of viscosity measurement, results of viscosity stability evaluation, and results of aggregate observation for the obtained dispersion are shown in Table 6.

**Table 4**

| | CNT | | Dispersant | | Defoamer | Water | IPA |
|---|---|---|---|---|---|---|---|
| | Type | Amount (parts) | Type | Amount (parts) | Amount (parts) | Amount (parts) | Amount (parts) |
| Comparative Example 27 | A | 2.5 | a | 12.5 | 0.25 | 222.25 | 12.5 |
| Example 31 | A | 2.5 | a | 12.5 | 0.25 | 222.25 | 12.5 |
| Example 32 | A | 2.5 | a | 12.5 | - | 235.00 | - |
| Example 33 | A | 2.5 | a | 12.5 | - | 235.00 | - |
| Example 34 | A | 2.5 | a | 12.5 | - | 235.00 | - |

**Table 5**

| | Wetting step | | Dispersion step | | | | | | | | X+Y (passes) |
|---|---|---|---|---|---|---|---|---|---|---|---|
| | | | First treatment | | | | Second treatment | | | | |
| | Apparatus | Time (h) | Disperser | Nozzle inner diameter D₁ (mm) | Treatment pressure (MPa) | Number of passes X (passes) | Disperser | Nozzle inner diameter D₂ (mm) | Treatment pressure (MPa) | Number of passes Y (passes) | |
| Comparative Example 27 | α1 | 4 | - | - | - | - | - | - | - | - | - |
| Example 31 | α1 | 4 | A1 | 0.3 | 2-50 | 2 | A2 | 0.1 | 150 | 2 | 4 |
| Example 32 | Stirrer + α2 | 1h + 2 passes | A1 | 0.3 | 2-50 | 2 | A2 | 0.1 | 150 | 2 | 4 |
| Example 33 | Stirrer | 12 | A1 | 0.3 | 2-50 | 2 | A2 | 0.1 | 150 | 5 | 7 |
| Example 34 | Stirrer | 12 | A1 | 0.3 | 2-50 | 2 | A2 | 0.1 | 150 | 10 | 12 |

**Table 6**

| | Viscosity (mPa·s) | | Viscosity stability | Observation of aggregates |
|---|---|---|---|---|
| | Immediately after dispersion | After 10 days | | |
| Comparative Example 27 | 59.1 | 69.9 | Poor | Poor |
| Example 31 | 9.1 | 9.0 | Excellent | Good |
| Example 32 | 28.6 | 27.1 | Good | Good |
| Example 33 | 8.9 | 8.8 | Excellent | Good |
| Example 34 | 8.2 | 8.1 | Excellent | Excellent |

### (Example 35)

Each constituent (other than CNT) of the type and amount shown in Table 7 was placed in a polyethylene cup having a volume of 500 mL. The resultant mixture was stirred until the mixture became uniform, and then CNT of the type and amount shown in Table 7 was added, and the resultant mixture was further stirred. A stirring bar was placed in the polyethylene cup, and the mixture was stirred for 12 hour using a magnetic stirrer to obtain a wetted mixture. The resultant wetted mixture was subjected to the first treatment (i) by 2 passes using disperser A1 under conditions of a nozzle inner diameter D₁ of 0.3 mm and a treatment pressure of 2 to 50 MPa. Thereafter, the wetted mixture was subjected to the second treatment (i) by 2 passes using disperser A2 under conditions of a nozzle inner diameter D₂ of 0.1 mm and a treatment pressure of 150 MPa, and thus a dispersion was obtained. To the obtained dispersion, additional CNT of the type and amount shown in Table 7 was added, and the resultant mixture was further stirred. A stirring bar was placed in the polyethylene cup, and the mixture was stirred for 12 hour using a magnetic stirrer to obtain a wetted mixture. The resultant wetted mixture was subjected to the first treatment (ii) by 2 passes using disperser A1 under conditions of a nozzle inner diameter D₁ of 0.3 mm and a treatment pressure of 2 to 50 MPa. Thereafter, the wetted mixture was subjected to the second treatment (ii) by 4 passes using disperser A2 under conditions of a nozzle inner diameter D₂ of 0.1 mm and a treatment pressure of 150 MPa, and thus a dispersion was obtained. Results of viscosity measurement, results of viscosity stability evaluation, and results of aggregate observation for the obtained dispersion are shown in Table 8.

**Table 7**

| | CNT | | Dispersant | | Water | Additional CNT | |
|---|---|---|---|---|---|---|---|
| | Type | Amount (parts) | Type | Amount (parts) | Amount (parts) | Type | Amount (parts) |
| Example 35 | A | 2.0 | C1 | 1.25 | 196.25 | A | 0.5 |

**Table 8**

| | Viscosity (mPa·s) | | Viscosity stability | Observation of aggregates |
|---|---|---|---|---|
| | Immediately after dispersion | After 10 days | | |
| Example 35 | 239.1 | 244.8 | Excellent | Excellent |

### (Reference Example)

When Example 35 is taken as a standard, there are other methods of preparing a carbon material dispersion, such as a method of separately adding a dispersant before the wetting step (ii) instead of charging the whole amount of the dispersant at initial blending and a method of performing a treatment in the second dispersion step with an apparatus under conditions different from the apparatus and conditions in the first dispersion step (for example, using only disperser A1 or A2 in the first treatment (ii) and the second treatment (ii); using only disperser A1 or A2 in the all the dispersion steps; setting the nozzle diameter D1 to 0.44 mm and the nozzle diameter D2 to 0.15 mm; etc.). Even if a carbon material dispersion is prepared by any of the methods, a dispersion having physical property values in the ranges shown in Examples can be obtained. This operation may further be performed plural times to make the carbon material concentration higher.

Absorbance was measured for some of the dispersions produced in Examples and Comparative Examples to calculate the absorbance ratio (A₃₈₀/A₇₈₀). Results are shown in Table 9. As shown in Table 9, as the value of the absorbance ratio is higher, there is a tendency that the viscosity stability is better, and aggregates are less likely to be recognized. Accordingly, when the value of the absorbance ratio is higher, the dispersibility is better.

**Table 9**

| | Absorbance ratio (A₃₈₀/A₇₈₀) | Viscosity (mPa·s) | | Viscosity stability | Observation of aggregates |
|---|---|---|---|---|---|
| | | Immediately after dispersion | After 10 days | | |
| Example 1 | 1.681 | 28.9 | 27.2 | Good | Good |
| Example 2 | 1.746 | 25.1 | 24.5 | Excellent | Good |
| Example 3 | 1.835 | 8.7 | 8.6 | Excellent | Excellent |
| Example 4 | 1.862 | 8.1 | 8.0 | Excellent | Excellent |
| Example 5 | 1.768 | 9.6 | 9.4 | Excellent | Good |
| Example 6 | 1.841 | 16.8 | 16.6 | Excellent | Excellent |
| Example 7 | 1.844 | 14.9 | 14.8 | Excellent | Excellent |
| Example 8 | 1.800 | 118.3 | 119.1 | Excellent | Good |
| Example 9 | 1.851 | 168.8 | 171.1 | Excellent | Excellent |
| Example 14 | 1.822 | 6.1 | 6.0 | Excellent | Excellent |
| Example 15 | 1.780 | 46.1 | 45.7 | Excellent | Good |
| Example 16 | 1.785 | 42.7 | 41.6 | Excellent | Good |
| Example 17 | 1.859 | 7.2 | 7.1 | Excellent | Excellent |
| Example 18 | 1.886 | 7.0 | 7.0 | Excellent | Excellent |
| Example 26 | 1.841 | 5.3 | 5.1 | Excellent | Excellent |
| Example 27 | 1.817 | 4.3 | 4.1 | Excellent | Excellent |
| Comparative Example 1 | 1.355 | 38.7 | 55.1 | Poor | Poor |
| Comparative Example 2 | 1.409 | 91.5 | 106.2 | Poor | Poor |
| Comparative Example 3 | 1.411 | 194.9 | 161.7 | Poor | Poor |
| Comparative Example 27 | 1.373 | 59.1 | 69.9 | Poor | Poor |
| Example 31 | 1.711 | 9.1 | 9.0 | Excellent | Good |
| Example 32 | 1.681 | 28.6 | 27.1 | Good | Good |
| Example 33 | 1.776 | 8.9 | 8.8 | Excellent | Good |
| Example 34 | 1.855 | 8.2 | 8.1 | Excellent | Excellent |

### <Preparation and Evaluation (3) of Dispersion>

### (Examples 36 to 41 and Comparative Examples 28 to 31)

NMP was used as the aqueous medium, and each constituent (other than CNT) of the type and amount shown in Table 10 was placed in a polyethylene cup having a volume of 500 mL. The resultant mixture was stirred until the mixture became uniform, and then CNT of the type and amount shown in Table 10 was added, and the resultant mixture was further stirred. A stirring bar was placed in the polyethylene cup, and the mixture was stirred for 12 hour using a magnetic stirrer to obtain a wetted mixture. The resultant wetted mixture was subjected to the first treatment using a disperser of the type shown in Table 11 under the conditions shown in Table 11. Thereafter, the wetted mixture was subjected to the second treatment using a disperser of the type shown in Table 11 under the conditions shown in Table 11 to obtain a dispersion. The absorbance ratio (A₃₈₀/A₇₈₀), results of viscosity measurement, results of viscosity stability evaluation, and results of aggregate observation for the obtained dispersion are shown in Table 12.

### (Example 42)

NMP was used as the aqueous medium, and each constituent (other than CNT) of the type and amount shown in Table 10 was placed in a polyethylene cup having a volume of 500 mL. The resultant mixture was stirred until the mixture became uniform, and then CNT of the type and amount shown in Table 10 was added, and the resultant mixture was further stirred. A stirring bar was placed in the polyethylene cup, and the mixture was stirred for 1 hour using a magnetic stirrer and then treated twice with a homogenizer (manufactured by SMT CO., LTD.) to obtain a wetted mixture. The resultant wetted mixture was subjected to the first treatment using a disperser of the type shown in Table 11 under the conditions shown in Table 11. Thereafter, the wetted mixture was subjected to the second treatment using a disperser of the type shown in Table 11 under the conditions shown in Table 11 to obtain a dispersion. The absorbance ratio (A₃₈₀/A₇₈₀), results of viscosity measurement, results of viscosity stability evaluation, and results of aggregate observation for the obtained dispersion are shown in Table 12.

**Table 10**

| | CNT | | Dispersant | | NMP |
|---|---|---|---|---|---|
| | Type | Amount (parts) | Type | Amount (parts) | Amount (parts) |
| Example 36 | A | 2.0 | B1 | 17.0 | 181.0 |
| Example 37 | A | 2.0 | B1 | 17.0 | 181.0 |
| Example 38 | A | 2.0 | B1 | 17.0 | 181.0 |
| Example 39 | C | 6.0 | e | 3.6 | 190.4 |
| Example 40 | C | 6.0 | e | 3.6 | 190.4 |
| Example 41 | C | 6.0 | e | 3.6 | 190.4 |
| Example 42 | A | 2.0 | B1 | 17.0 | 181.0 |
| Comparative Example 28 | A | 2.0 | B1 | 17.0 | 181.0 |
| Comparative Example 29 | A | 2.0 | B1 | 17.0 | 181.0 |
| Comparative Example 30 | C | 6.0 | e | 3.6 | 190.4 |
| Comparative Example 31 | C | 6.0 | e | 3.6 | 190.4 |

**Table 11**

| | Wetting step | | Dispersion step | | | | | | | | X+Y (passes) |
|---|---|---|---|---|---|---|---|---|---|---|---|
| | | | First treatment | | | | Second treatment | | | | |
| | Apparatus | Time (h) | Disperser | Nozzle inner diameter D₁ (mm) | Treatment pressure (MPa) | Number of passes X (passes) | Disperser | Nozzle inner diameter D₂ (mm) | Treatment pressure (MPa) | Number of passes Y (passes) | |
| Example 36 | Stirrer | 12 | A1 | 0.3 | 2-50 | 2 | A2 | 0.1 | 150 | 5 | 7 |
| Example 37 | Stirrer | 12 | A1 | 0.3 | 2-50 | 2 | A2 | 0.1 | 150 | 10 | 12 |
| Example 38 | Stirrer | 12 | A1 | 0.3 | 2-50 | 2 | A2 | 0.1 | 150 | 15 | 17 |
| Example 39 | Stirrer | 12 | A1 | 0.3 | 2-50 | 2 | A2 | 0.1 | 150 | 5 | 7 |
| Example 40 | Stirrer | 12 | A1 | 0.3 | 2-50 | 2 | A2 | 0.1 | 150 | 7 | 9 |
| Example 41 | Stirrer | 12 | A1 | 0.3 | 2-50 | 2 | A2 | 0.1 | 150 | 9 | 11 |
| Example 42 | Stirrer +α2 | 1h +2 passes | A1 | 0.3 | 2-50 | 2 | A2 | 0.1 | 150 | 2 | 4 |
| Comparative Example 28 | Stirrer | 12 | A1 | 0.3 | 2-50 | 2 | - | - | - | - | 2 |
| Comparative Example 29 | Stirrer | 12 | A1 | 0.3 | 2-50 | 2 | A2 | 0.1 | 150 | 40 | 42 |
| Comparative Example 30 | Stirrer | 12 | A1 | 0.3 | 2-50 | 2 | - | - | - | - | 2 |
| Comparative Example 31 | Stirrer | 12 | A1 | 0.3 | 2-50 | 2 | A2 | 0.1 | 150 | 40 | 42 |

**Table 12**

| | Absorbance ratio (A₃₈₀/A₇₈₀) | Viscosity (mPa·s) | | Viscosity stability | Observation of aggregates |
|---|---|---|---|---|---|
| | | Immediately after dispersion | After 10 days | | |
| Example 36 | 1.786 | 27.0 | 28.1 | Excellent | Excellent |
| Example 37 | 1.829 | 26.5 | 27.0 | Excellent | Excellent |
| Example 38 | 1.855 | 26.2 | 26.5 | Excellent | Excellent |
| Example 39 | 1.736 | 3.5 | 3.7 | Good | Excellent |
| Example 40 | 1.791 | 3.2 | 3.3 | Excellent | Excellent |
| Example 41 | 1.839 | 3.0 | 3.0 | Excellent | Excellent |
| Example 42 | 1.675 | 76.8 | 86.0 | Fair | Good |
| Comparative Example 28 | 1.436 | 96.8 | 138.4 | Poor | Poor |
| Comparative Example 29 | 1.571 | 65.5 | 104.8 | Poor | Poor |
| Comparative Example 30 | 1.512 | 22.9 | 26.7 | Poor | Poor |
| Comparative Example 31 | 1.598 | 6.3 | 9.1 | Poor | Poor |

As described above, when a dispersion treatment is performed in such a way as to make the absorbance ratio (A₃₈₀/A₇₈₀) 1.60 or more, thereby it is possible to obtain a dispersion: which enables the carbon material containing a carbon nanotube to exhibit the intrinsic performance thereof sufficiently, even if the composition or the dispersion process is different; which is excellent in viscosity stability; and in which an aggregate is not substantially observed.

### (Application Example 1-1: Production Method in Scale-UP)

In a stainless steel container having a volume of 20 L, 1,000 parts of dispersant a, and 8,800 parts of water were placed. The resultant mixture was stirred with a dissolver until the mixture became uniform, and 200 parts of CNT-A was added little by little under stirring. Then, the resultant mixture was further stirred. The mixture was sufficiently mixed by performing a circulation-type treatment corresponding to 4 passes using a homogenizer (manufactured by SMT CO., LTD.). Subsequently, a circulation-type, high-pressure treatment was performed using a high-pressure homogenizer (manufactured by JOKOH CO., LTD.) including a nozzle having an inner diameter of 0.44 mm under a condition of a treatment pressure of 2 to 50 MPa for a time corresponding to 10 passes. Thereafter, a circulation-type, high-pressure treatment was performed using a high-pressure homogenizer (manufactured by SUGINO MACHINE LIMITED) including a nozzle having an inner diameter of 0.1 mm under a condition of a treatment pressure of 150 MPa for a time corresponding to 5 passes. The absorbance ratio (A₃₈₀/A₇₈₀) of the resultant dispersion was 1.811. In addition, the viscosity of the resultant dispersion was 9.1 mPa·s, and the viscosity after 10 days was 8.8 mPa·s. Both of the result of evaluation of viscosity stability and the result of observation of aggregates were "Excellent."

### (Application Example 2-1: Battery Material (Negative Electrode))

The following materials were used in producing a negative electrode of a lithium-ion battery.

### [Negative Electrode Active Material]

- Graphene (manufactured by FUJIFILM Wako Pure Chemical Corporation)
- Silicon monoxide (manufactured by FUJIFILM Wako Pure Chemical Corporation)

### [Binder]

- 10% polyacrylic acid aqueous solution (trade name "CLPA-C07," manufactured by FUJIFILM Wako Pure Chemical Corporation)
- Carboxymethyl cellulose (trade name "CMC Daicel 2200," manufactured by Daicel Miraizu Ltd.)

A negative electrode material was obtained by mixing 15 parts of silicon monoxide, 85 parts of graphene, 3 parts of the dispersion produced in Example 7, 30 parts of the 10% polyacrylic acid aqueous solution, and 2 parts of carboxymethyl cellulose using a planetary mixer. The negative electrode material was applied on a copper foil having a thickness of 20 µm using an applicator such that the weight per unit area after drying was 15 mg/cm². The applied negative electrode material was placed in an oven set at 120°C for 30 minutes for drying, and then the copper foil was rolled with a roll press to obtain a negative electrode. The obtained negative electrode had a volume resistivity of 0.2 Ω·cm.

### (Application Example 2-2: Battery Material (Negative Electrode))

A negative electrode was produced in the same manner as in Application Example 2-1, described above, except that the dispersion produced in Comparative Example 2 was used. The produced negative electrode had a volume resistivity of 0.6 Ω·cm. It was found from those described above that by using a dispersion for which evaluation of dispersion is favorable, a negative electrode exhibiting a smaller volume resistivity value can be produced.

(Application Example 3-1: Antistatic Coating Agent) In a polyethylene cup, 100 g of the dispersion produced in Example 7, 100 g of a polymer binder (trade name "NeoPac R-9699," manufactured by Kusumoto Chemicals, Ltd., acrylic urethane resin), and 800 of pure water were placed, and the resultant mixture was stirred with a dissolver to obtain an antistatic coating agent. The obtained antistatic coating agent was applied on a surface of a polyethylene terephthalate film (manufactured by Toray Corporation) having a thickness of 38 µm with a bar coater such that the coating film after drying had a thickness of 0.5 µm. The applied antistatic coating agent was placed in an oven set at 80°C for 10 minutes for drying to obtain an antistatic coating film. The obtained film had a surface resistivity of 7 × 10⁷ Ω·cm².

### (Application Example 3-2: Antistatic Coating Agent)

An antistatic coating film was produced in the same manner as in Application Example 3-1, described above, except that the dispersion produced in Comparative Example 2 was used. The produced film had a surface resistivity of 9 × 10⁸ Ω·cm². It was found from those described above that by using a dispersion for which evaluation of dispersion is favorable, an antistatic coating film exhibiting a smaller surface resistivity value can be produced.

### Industrial Applicability

According to the production method of the present invention, it is possible to produce a carbon material dispersion: which is is useful as a constituent material for a paint, an ink, a resin-shaped article, or the like, each exhibiting properties such as high electrical conductivity and high thermal conductivity; and which is suitable for various applications, such as a battery material, an electronic component tray, an IC chip cover, an electromagnetic wave shield, an automobile member, and a robot component.

## Claims

1. A method for producing a carbon material dispersion, the method comprising:
a step (1) of subjecting a raw material comprising: a carbon material comprising a carbon nanotube; a dispersant; and a liquid medium to a stirring treatment to obtain a wetted mixture; and
a step (2) of subjecting the wetted mixture to a dispersion treatment using a high-pressure homogenizer, wherein
the high-pressure homogenizer is at least any one of a high-pressure homogenizer (A1) employing a system of allowing the wetted mixtures jetted by pressurization to collide with each other to form fine particles and a high-pressure homogenizer (A2) employing a system of introducing the wetted mixture pressurized into a collision chamber to form fine particles, and
the wetted mixture is subjected to the dispersion treatment so as to satisfy the following dispersion condition:
[dispersion condition]
a first treatment is performed X times, wherein the first treatment is such that: a treatment pressure of 1 to 100 MPa is applied to the wetted mixture to form fine particles using any one of the high-pressure homogenizer (A1) and the high-pressure homogenizer (A2); and the wetted mixture is ejected from an ejection nozzle having a nozzle inner diameter of D₁; and then,
a second treatment is performed Y times, wherein the second treatment is such that: a treatment pressure of 120 to 250 MPa is applied to the wetted mixture to form fine particles using any one of the high-pressure homogenizer (A1) and the high-pressure homogenizer (A2); and the wetted mixture is ejected from an ejection nozzle having a nozzle inner diameter of D₂, provided that D₁>D₂, X≥2, and 2≤Y≤30.

2. The method for producing a carbon material dispersion according to claim 1, wherein the nozzle inner diameter D₁ is 0.15 to 2.0 mm, and the nozzle inner diameter D₂ is 0.1 to 1.0 mm.

3. The method for producing a carbon material dispersion according to claim 1 or 2, wherein
the liquid medium is water, or a mixed solvent of water and a water-soluble organic solvent,
the dispersant is a cellulose derivative or a polymeric dispersant,
the cellulose derivative is such that a 1%-by-mass aqueous solution thereof has a viscosity of 20 to 500 mPa·s and a degree of etherification thereof is 0.5 to 0.9, and
the polymeric dispersant is a polymer comprising 5 to 40% by mass of a constituent unit (1) derived from at least one monomer 1 selected from the group consisting of 2-vinylpyridine, 4-vinylpyridine, 1-vinylimidazole, and quaternary ammonium salts thereof, 50 to 80% by mass of a constituent unit (2) derived from a monomer 2 represented by the following formula (1), and 0.5 to 40% by mass of a constituent unit (3) derived from a monomer 3 copolymerizable with the monomer 1 and the monomer 2, wherein
the monomer 3 comprises α-methylstyrene and (meth)acrylic acid, and
the content of a constituent unit derived from α-methylstyrene is 0.5 to 5% by mass, the content of a constituent unit derived from (meth)acrylic acid is 0.5 to 30% by mass, and the number average molecular weight is 5,000 to 20,000: 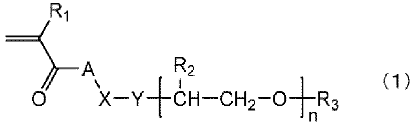
wherein R₁ represents a hydrogen atom or a methyl group, A represents O or NH, X represents an ethylene group or a propylene group, Y represents O, NHCOO, or NHCONH, each of R₂ independently represents a hydrogen atom or a methyl group, n represents an average number of repeating units of 20 to 100, and R₃ represents a hydrogen atom or a methyl group, provided that the number n_{H} of repeating units where R₂ is a hydrogen atom is 1/2 or more of the number n_{T} of repeating units in the whole polymer.

4. The method for producing a carbon material dispersion according to claim 1 or 2, wherein
the liquid medium is a water-soluble organic solvent substantially free of water, and
the dispersant is a polymer comprising 3 to 55% by mass of a constituent unit (A) derived from a monomer A represented by the following formula (A), 30% by mass or less of a constituent unit (B) derived from a monomer B represented by the following formula (B), 45 to 90% by mass of a constituent unit (C) derived from a monomer C represented by the following formula (C), and 0.5 to 20% by mass of a constituent unit (D) derived from a monomer D copolymerizable with the monomers A, B, and C, the polymer having an amine value of 100 mgKOH/g or less and a number average molecular weight of 5,000 to 20,000: 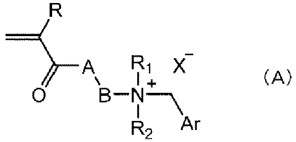
wherein R represents a hydrogen atom or a methyl group, A represents O or NH, B represents an ethylene group or a propylene group, R₁ and R₂ each independently represent a methyl group or an ethyl group, Ar represents a phenyl group, a naphthyl group, an anthracenyl group, or a pyrenyl group, and X represents a chlorine atom, a bromine atom, bis(trifluoromethyl)sulfonimide, or bis(nonaflulorobutanesulfonyl)imide; 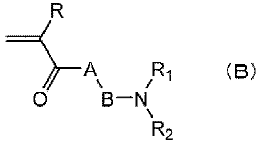
wherein R represents a hydrogen atom or a methyl group, A represents O or NH, B represents an ethylene group or a propylene group, and R₁ and R₂ each independently represent a methyl group or an ethyl group; and 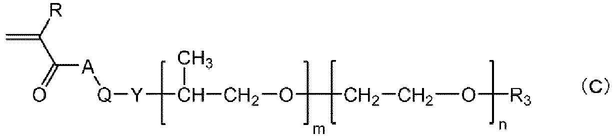
wherein R represents a hydrogen atom or a methyl group, A represents O or NH, Q represents an ethylene group or a methylethylene group, Y represents O, NHCOO, or NHCONH, m and n each independently represent an average number of repeating units of 0 or more and satisfy m + n = 20 to 100, and R₃ represents a C1-18 alkyl group, aryl group, or alkylaryl group.

5. The method for producing a carbon material dispersion according to any one of claims 1 to 4, wherein
the content of the dispersant based on 100 parts by mass of the carbon material in the raw material is 10 to 50 parts by mass,
the content of the carbon material in the raw material is 10% by mass or less, and
the content of the dispersant in the raw material is 30% by mass or less.
